# EUROPEAN PATENT SPECIFICATION

(11) **EP 3 984 187 B1**
(45) Date of publication and mention of the grant of the patent: **31.12.2025**
(21) Application number: 19798300.0
(22) Date of filing: 05.11.2019
(51) Int. Cl.: H04L 9/40, H04W 12/084, H04W 4/70

(54) **INTERNET OF THINGS (IOT) TRUSTWORTHINESS AS A SERVICE (TAAS)**
VERTRAUENSWÜRDIGKEIT ALS DIENST (TAAS) DES INTERNETS DER DINGE (IOT)
FIABILITÉ EN TANT QUE SERVICE (TAAS) DE L'INTERNET DES OBJETS (IOT)

(30) Priority: 12.06.2019 US 201962860536 P
(43) Date of publication of application: 20.04.2022
(73) Proprietor: TELEFONAKTIEBOLAGET LM ERICSSON (PUBL), 164 83 Stockholm (SE)
(72) Inventor: BARRIGA, Luis, 16940 Solna (SE); DEOL, Rajpal, 30005-8504 Alpharetta (SE)
(74) Representative: Ericsson
(86) International application number: PCT/EP2019/080246
(87) International publication number: WO 2020/249245

(56) References cited:
- US-A1- 2019 028 281
- TRUONG NGUYEN B ET AL: "Leverage a Trust Service Platform for Data Usage Control in Smart City", 2016 IEEE GLOBAL COMMUNICATIONS CONFERENCE (GLOBECOM), IEEE, 4 December 2016 (2016-12-04), pages 1 - 7, XP033058675, [retrieved on 20170202], DOI: 10.1109/GLOCOM.2016.7841951
- CHEN ING-RAY ET AL: "Trust as a Service for IoT Service Management in Smart Cities", 2018 IEEE 20TH INTERNATIONAL CONFERENCE ON HIGH PERFORMANCE COMPUTING AND COMMUNICATIONS; IEEE 16TH INTERNATIONAL CONFERENCE ON SMART CITY; IEEE 4TH INTERNATIONAL CONFERENCE ON DATA SCIENCE AND SYSTEMS (HPCC/SMARTCITY/DSS), IEEE, 28 June 2018 (2018-06-28), pages 1358 - 1365, XP033507015, [retrieved on 20190122], DOI: 10.1109/HPCC/SMARTCITY/DSS.2018.00225
- EUROPEAN TELECOMMUNICATIONS STANDARDS INSTITUTE (ETSI): "CYBER; Identity management and naming schema protection mechanisms", 12 February 2018 (2018-02-12), XP014303169, Retrieved from the Internet <URL:docbox.etsi.org/CYBER/CYBER/70-Drafts/0015/CYBER-0014v008.docx> [retrieved on 20180212]
- EUROPEAN TELECOMMUNICATIONS STANDARDS INSTITUTE (ETSI): "CYBER; Cyber Security for Consumer Internet of Things", 1 February 2019 (2019-02-01), XP014360110, Retrieved from the Internet <URL:docbox.etsi.org/CYBER/CYBER/05-CONTRIBUTIONS/2019/2019_09_11_PL_CYBER%2317/CYBER(19)16d010_Comments_on_TS_103_645_for_input_to_EN_303_645.zip CYBER(19)16d010-ETSI%20TS%20103645%20010101%20Review%20Vangelis%20Gazis%20Update%20Post%20Call%2020190708.docx> [retrieved on 20190712]

## Description

### TECHNICAL FIELD

The proposed technology generally relates to Internet of Things (IoT) cybersecurity, and more specifically to methods and corresponding systems for supporting IoT Trustworthiness as a Service (TaaS) related to an IoT device, including an IoT certification system and a support system, as well as corresponding network entities and computer programs and computer-program products.

### BACKGROUND

Internet of Things (IoT) is a worldwide, interconnected network of devices that among other things enables monitoring, collection, and analysis of data and information related to the devices and their surroundings. IoT is quickly becoming an integral part of society, industry, military and governmental organizations with a range of advanced capabilities that will have major impact in all spheres of technology.

According to a National Institute of Standards and Technology (NIST) report [8], there are two fundamental IoT concepts: i) IoT component, also referred to as IoT device, and ii) IoT system.

***IoT component*:** A basic building block of an IoT system. Multiple IoT components may interact with each other to form a system and achieve one or more goals. Each IoT component provides some function that is necessary within the system. An IoT component has:
- at least one network interface that provides the ability to participate in a many-to-many network, although a given IoT component need not communicate with more than one other IoT component in a given system (e.g., assigning and limiting communication between two static IP addresses); and
- one or more the following capabilities: actuating; application interface; data processing; data storing; data transferring; human user interface (UI); latent; sensing; and supporting.

***IoT system*:** A system composed of networked IoT components or other, possibly integrated IoT systems, that interacts with a physical entity through sensors and/or actuators within the IoT components.

IoT systems differ from conventional IT systems in their ability to directly interact with the physical world. IoT systems may also be considered IoT components if the system provides a network interface.

One of the major issues with IoT devices (i.e. IoT component according to NIST terminology) is that a large amount of them are manufactured without security considerations which makes them target of attacks from cybercriminals that abuse the IoT computing and connectivity resources for malicious purposes such as DDoS attacks, crypto-mining, industrial espionage, among others.

There is ongoing research and industry initiatives that seek to improve the cybersecurity of IoT devices. These can be roughly classified into: prevention, avoidance, and detection. These initiatives can be of technical and/or regulatory character.

Preventive measures include measures that improve the cybersecurity before the device is deployed into the field of operations by putting requirements in the manufacturing process so that the device includes the necessary security mechanisms to operate safely in production. These features are tested by the manufacturer using some sort of security reliability process. Such measures may also include requirements to the software and hardware supply chain so that all components are verified. Certification, also called assurance, is also the process of verification of security mechanisms by an independent trusted party.

Attestation of devices involves verifying the device security once deployed in the field by contacting the device on-line, and via a sequence of query responses a verifier can check the security of the device. This assumes that the device has the capabilities for attestation which is not always the case for low-medium end devices.

Avoidance measures include procedures and processes that do not rely on the security of the device itself, but instead protect the environment in which the device is deployed - e.g. using proxies, firewalls, Network Address Translators (NATs) - so that the attack surface is significantly reduced. Enterprises often use this approach when deploying devices so that the traffic is limited between the enterprise and their devices. Mobile operators often assign private IP addresses behind NATs which limits the device exposure.

There are some regulatory and industry initiatives that put requirements on vendors, such as the European Union Agency for Network and Information Security (ENISA), UK Code of practice, the European Telecommunications Standards Institute (ETSI), California bill, the Cellular Telecommunications Industry Association (CTIA) and US Congress.

ENISA [2] has published a set of baseline security recommendations for the secure software/hardware development lifecycle of IoT devices.

The UK Department for Digital, Culture, Media & Sport has published a quite simple document with 13 principles Code of Practice for Consumer IoT Security [3].

The ETSI Technical Committee on Cybersecurity (TC CYBER) has released a standard for IoT cybersecurity to establish a security baseline for consumer products connected to the internet and provide a basis for future IoT certification schemes [4].

The California state bill 327 is a legislation that applies to the state of California and puts a few security requirements to manufacturers which will enter in to force on Jan 1, 2020.

CTIA IoT Certification Program [1] is driven by the US Wireless Industry. The Internet of Things Cybersecurity Improvement Act is designed to make sure the US federal government is not buying IoT devices that can be easily hacked. CTIA authorizes certification centers to test IoT devices according to a set of one or more well-defined published test plans. Devices that pass certification are recorded in CTIA database with the following model-specific information:
- Manufacturer
- Model name
- Hardware version
- Software version
- Wireless Technologies supported
- Use manual
- Certification Level
- Test report (from CATL)
- Test date

The IETF has recently approved a standard specification RFC 8520 "Manufacturer Usage Description" (MUD) [5] that helps IoT device owners to track the correct behavior of their devices in production. A MUD specification is expected to be published by the device manufacturer describing the device network behavior with respect to IP addresses and ports. As long as a device behavior in production conforms to the MUD specification the device can be trusted.

Device management (DM) refers to enterprise solutions that keep track of a device group during their whole life cycle: configuration, bootstrapping, provisioning, deployment, monitoring, patching, upgrades and termination. DM solutions maintain a registry of the devices with their corresponding profiles.

Detection measures analyze the traffic generated by the device once it has been deployed in the field by conducting a recognizance of services exposed by the device in order assess the device trust. Example of services that provide an on-line assessment of the devices are Shodan [6] and Censys [7], which are two well-know "IoT search engines" that scan the Internet looking for connected devices, including IoT ones, building a device profile of the ones that respond queries from these services and making that information available on-line via Web GUI or APIs for automation of detection of devices.

These services rely only on the responses that the device replies on-line. Such an approach can reveal lots of information about a device, including manufacturer and model, device category, geo-location, exposed device services via ports, supported protocols and even login credentials. The service is also restricted to reachable devices over the Internet and the discovered information doesn't reveal information about the device certification.

There is a general need for improvements related to the cybersecurity of IoT devices, and especially certification of IoT devices.

US 2019/028281 relates to the issuance of a digital certificate onto a hardware security module within a security certified or protected manufacturing environment.

### SUMMARY

It is a general object to provide and/or support IoT certification and/or trustworthiness services such as a so-called IoT Trustworthiness as a Service (TaaS).

It is a specific object to provide various complementary methods for supporting IoT TaaS related to an IoT device.

It is also an object to provide various systems configured to support IoT TaaS related to an IoT device.

Another object is to provide a network entity comprising such a system.

Yet another object is to provide an IoT certification system configured to support IoT TaaS related to an IoT device.

Still another object is to provide a network entity comprising such an IoT certification system.

Yet another object is to provide an Internet of Things (IoT) device configured to support IoT TaaS.

It is also an object to provide various computer programs for controlling, when executed, a system configured to support IoT TaaS.

Another object is to provide a computer program for controlling, when executed, an IoT certification system configured to support IoT TaaS.

It is also an object to provide corresponding computer-program products.

These and other objects are met by embodiments of the proposed technology.

The invention is defined by the independent claims. Further embodiments are defined by the dependent claims.

In this way, it is possible to effectively provide and/or support Internet of Things (IoT) Trustworthiness as a Service (TaaS).

Other advantages will be appreciated when reading the detailed description.

### BRIEF DESCRIPTION OF THE DRAWINGS

The embodiments, together with further objects and advantages thereof, may best be understood by making reference to the following description taken together with the accompanying drawings, in which:
FIG. 1 is a schematic diagram illustrating an example of the need for various entities to exchange and receive information about the trustworthiness of IoT devices.
FIG. 2 is a schematic diagram illustrating an example of the need of a trustworthiness service that can aid in assessing the trustworthiness of a given IoT connected device in real-time based on data from various sources of information.
FIG. 3 is a schematic flow diagram illustrating an example of a method for supporting Internet of Things (IoT) Trustworthiness as a Service (TaaS) related to an IoT device, from the perspective of a network entity acting as TaaS consumer or receiver or proxy.
FIG. 4 is a schematic flow diagram illustrating an example of a method for supporting Internet of Things (IoT) Trustworthiness as a Service (TaaS) related to an IoT device, from the perspective of a network entity acting as TaaS provider.
FIG. 5 is a schematic flow diagram illustrating another example of a method for supporting Internet of Things (IoT) Trustworthiness as a Service (TaaS) related to an IoT device, from the perspective of a network entity acting as TaaS consumer or receiver or proxy.
FIG. 6 is a schematic diagram illustrating an example of an overall IoT system involving an IoT certification system and an associated support system related to an IoT device.
FIG. 7 is a schematic diagram illustrating another example of an overall IoT system involving an IoT certification system and an associated support system related to an IoT device.
FIG. 8 is a schematic diagram illustrating yet another example of an overall IoT system involving an IoT certification system and an associated support system related to an IoT device.
FIG. 9 is a schematic diagram illustrating an example of a basic IoT Trustworthiness as a Service building block as well as examples of involved actors and interfaces.
FIG. 10 is a schematic diagram illustrating an example of IoT Trustworthiness as a Service collecting information from one or more underlying services, internal and/or external, that serve as indicators of trust, in order to provide certification of trustworthiness.
FIG. 11 is a schematic diagram illustrating an example of a scenario and system overview in which an application service provider or enterprise is a consumer or receiver of the TaaS service.
FIG. 12 is a schematic diagram illustrating an example of a scenario and system overview in which a communication service provider such as a mobile operator is a consumer or receiver or proxy of the TaaS service.
FIG. 13 is a schematic diagram illustrating another example of a scenario and system overview in which an application service provider or enterprise is a consumer or receiver of the TaaS service.
FIG. 14 is a schematic diagram illustrating another example of a scenario and system overview in which a communication service provider such as a mobile operator is a consumer or receiver or proxy of the TaaS service.
FIG. 15 is a schematic diagram illustrating an example of a scenario and system overview in which a communication service provider such as a mobile operator acts as a proxy of the TaaS service to provision the IoT device with a certification proof, which can subsequently be used with an application service provider and/or enterprise.
FIG. 16 is a schematic diagram illustrating an example of a scenario and system overview in which an identity and trust(worthiness) provider acts as a proxy of the TaaS service to provision the IoT device with a proof of identity and trustworthiness, which can subsequently be used, e.g. with an application service provider and/or enterprise.
FIG. 17A is a schematic block diagram illustrating an example of an IoT certification system according to an embodiment.
FIG. 17B is a schematic block diagram illustrating an example of a network entity (node) comprising an IoT certification system according to an embodiment.
FIG. 18A is a schematic block diagram illustrating an example of an IoT TaaS support system according to an embodiment.
FIG. 18B is a schematic block diagram illustrating an example of a network entity (node) comprising an IoT TaaS support system according to an embodiment.
FIG. 19 is a schematic diagram illustrating an example of a computer-implementation according to an embodiment.
FIG. 20 is a schematic flow diagram illustrating an example of method for supporting Internet of Things (IoT) Trustworthiness as a Service (TaaS) related to an IoT device.
FIG. 21 is a schematic block diagram illustrating an example of an IoT device.

### DETAILED DESCRIPTION

Throughout the drawings, the same reference designations are used for similar or corresponding elements.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As a concept, Internet of Things (IoT) can be seen as an extension of Internet connectivity into physical devices and everyday technical objects. Embedded with electronics, Internet connectivity, and other forms of hardware (such as sensors), these devices can communicate and interact with others over the Internet, and they can be remotely monitored and controlled. The definition of the Internet of things has evolved due to convergence of multiple technologies, real-time analytics, machine learning, commodity sensors, and embedded systems. Traditional industrial fields such as embedded systems, wireless sensor networks, control systems, automation (including home and building automation), and others all contribute to enabling the Internet of things. In the consumer market, IoT technology may for example be related to products pertaining to the concept of the "smart home", covering devices and appliances (such as lighting fixtures, thermostats, home security systems and cameras, and other home appliances) that support one or more common ecosystems, and can be controlled via devices associated with that ecosystem, such as smartphones and smart speakers.

As previously mentioned, the non-limiting term "IoT device" may refer to any IoT component or device capable of communicating with one or more components in a given IoT system. The proposed technology is also applicable to mobile devices, smart phones and/or other devices when used in their capacity as IoT devices.

As used herein, the non-limiting term "Trustworthiness" may for example refer to the assurance of selected security principles/requirements and/or availability and/or reliability requirements related to a device, component and/or system. Trustworthiness normally includes an understanding of the resilience of the device, component and/or system to conditions that stress the security, availability and/or reliability requirements. In other words, trustworthiness can be regarded as an indication as to how much a device, component and/or system can be trusted from a technical point of view.

As used herein, the non-limiting term "Trustworthiness as a Service (TaaS)" may refer to trustworthiness (or the certification of trustworthiness of a device) being made available as a service, normally in the context of cloud computing. In general, there is a provider of such a service as well as a consumer or receiver or proxy of the service, i.e. a TaaS provider and a TaaS consumer/receiver/proxy, respectfully.

As used herein, the non-limiting term "TaaS provider" may refer to any device, entity, or collection or system of operative components and/or devices, including network nodes, which operates, deploys, and/or maintains infrastructure for providing such a service.

Analogously, the non-limiting term "TaaS consumer/receiver/proxy" may refer to any device, entity, or collection or system of operative components and/or devices, including network nodes, which operates, deploys, and/or maintains infrastructure for consuming, using and/or receiving such a service. It should be understood that the term "TaaS consumer/receiver/proxy" may also include any device, entity and/or network node that operates as a proxy for relaying the service to an interrelated device, entity and/or network node, or to the IoT device. Such a proxy may also be considered as a trusted party. The terms "TaaS consumer, TaaS receiver or TaaS proxy" and "TaaS consumer/receiver/proxy" may be used interchangeably.

In the context of the proposed technology, we specifically refer to TaaS in the context of IoT, i.e. IoT TaaS, or simply abbreviated as IoTaaS.

As used herein, the non-limiting term "digital IoT certification proof" may refer to any digital proof that is representative of the trustworthiness of an IoT device. The terms "digital IoT certification proof", "digital certification proof' and "certification proof" are used interchangeably to represent any structured data implementing a digital proof of certification that represents trustworthiness of an IoT device.

As used herein, the non-limiting term "IoT service" may refer to any service related to an IoT device such as an IoT application service, IoT connectivity service (wired and/or wireless connectivity) and/or IoT identity assertion service. Wireless connectivity includes any and all forms of wireless communication including Wi-Fi, WLAN, cellular, mobile, 3G, 4G, 5G and so forth.

As used herein, the non-limiting term "service provider" may refer to any service provider such as an application service provider or communication service provider (e.g. a mobile operator), here primarily used for IoT devices, and may include any entity, or collection of operative components and/or network nodes, that operates, deploys, and/or maintains infrastructure for providing services such as application and/or communication services, and may encompass any system operator owning and/or leasing a system and/or network infrastructure such as base stations, routers, switches, transport nodes and/or a service delivery infrastructure including equipment such as servers, data centers and so forth.

As used herein, the non-limiting term "identity provider" may refer to any provider of identity assertion services. By way of example, such an identity provider may provide a signed identity assertion for an IoT device. When used together with the proposed technology and acting as a TaaS proxy for relaying a digital IoT certification proof, the identity provider may also be referred to as an "identity and trustworthiness provider" in its additional capacity as a TaaS proxy. The terms "identity provider" and "identity and trustworthiness provider" may be used interchangeably.

As used herein, the non-limiting term "network entity" may generally refer to any technical entity, component, device, system and/or or node located in connection with a network environment such as a wired and/or wireless communication network, including Internet components and/or network nodes of wireless communication systems.

As used herein, the non-limiting term "network node" may refer to any node or device located in connection with a communication network, including but not limited to devices in access networks, core networks and similar network structures. The term network node may also encompass cloud-based network devices.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

It may be useful to begin with a brief overview and analysis of some situations and scenarios that may benefit from improved IoT cybersecurity.

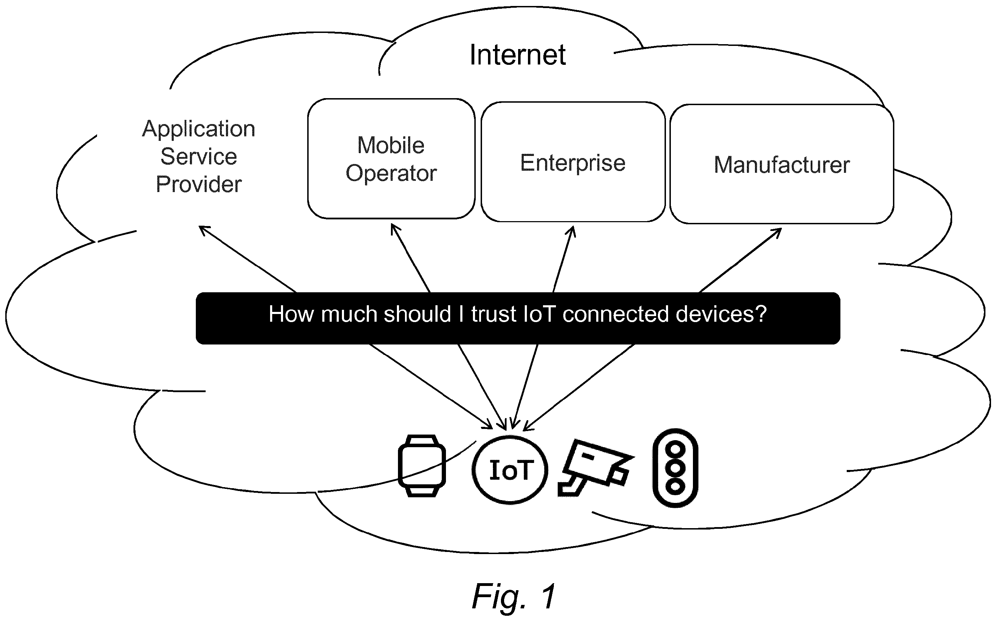

By way of example, when an IoT device is connected via a wired and/or wireless network, application service providers, enterprises, mobile connectivity operators need information about the device trustworthiness before granting access to the requested service (e.g. see FIG. 1). Also, enterprises relying on IoT need to be able to know at any point in time about the trustworthiness of their devices including certification status.

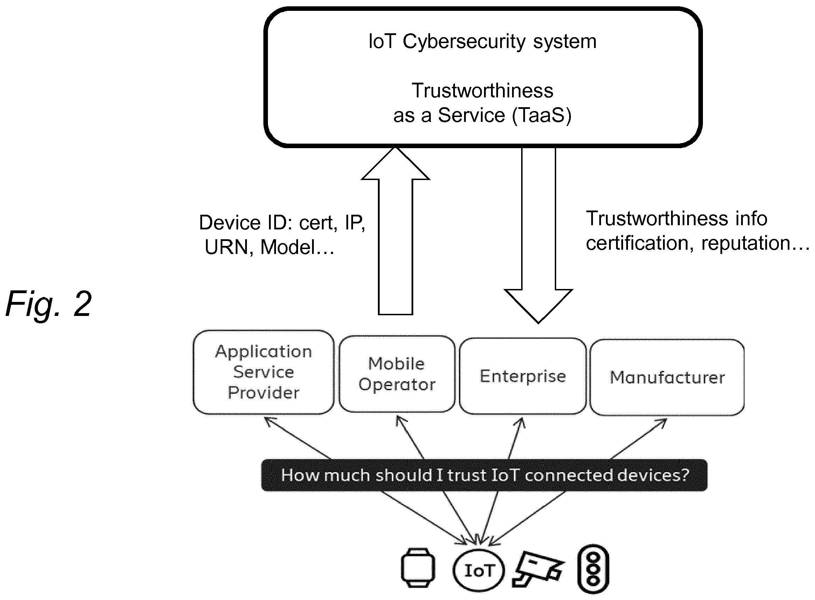

The inventors have realized that there is a need of a trustworthiness service that can aid or assist in assessing the trustworthiness of a given IoT connected device, preferably in real-time. Such a trustworthiness service could use various sources of information such as information from device management solution, connectivity services and additionally 3rd party cloud services such as Shodan and certification information of given device brand, model and version from certification bodies, such as CTIA when available (e.g. see FIG. 2).

While such trustworthiness information could be made available before device deployment as a business process, there are cases where such information may not always be available prior to deployment or could be outdated. For example, a device model may pass certification post-deployment, or the device might have been upgraded and the certification has been done to a previous version of the device. A device might also gain a higher trust level after deployment. Zero-day attacks can also change the trustworthiness of a certain device model based on a specific version of the HW/SW.

Accordingly, there is a need of a trustworthiness service that can reliably provide the overall status of the trustworthiness or trustability of an IoT device based on one or several input sources including certification status.

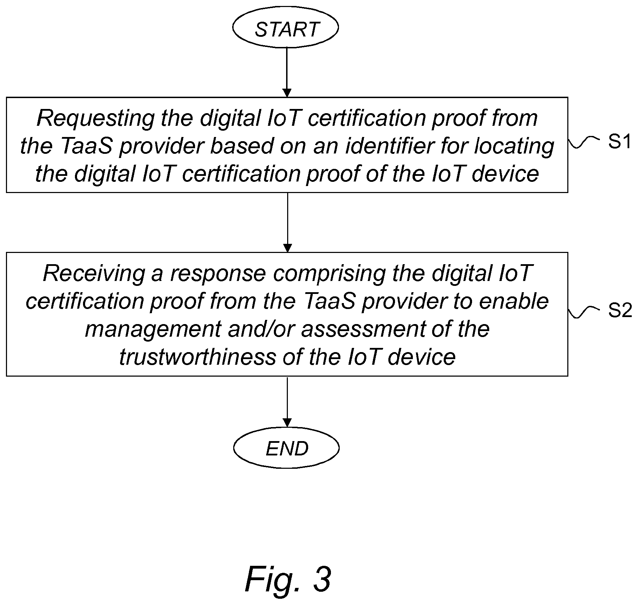

FIG. 3 is a schematic flow diagram illustrating an example of a method for supporting Internet of Things (IoT) Trustworthiness as a Service (TaaS) related to an IoT device, from the perspective of a network entity acting as TaaS consumer or receiver or proxy.

According to a first aspect, there is provided a method for supporting Internet of Things (IoT) Trustworthiness as a Service (TaaS) related to an IoT device. The IoT device being arranged for connection to the Internet via a wired or wireless communication system. The method is based on an automated request-response procedure performed by a network entity acting as TaaS consumer, TaaS receiver or TaaS proxy, also referred to as TaaS consumer/receiver/proxy, to obtain a digital IoT certification proof representative of the trustworthiness of the IoT device from an IoT certification system acting as TaaS provider. The automated request-response procedure comprises:
S1: requesting the digital IoT certification proof from the TaaS provider based on an identifier for locating the digital IoT certification proof for the IoT device; and
S2: receiving a response comprising the digital IoT certification proof from the TaaS provider to enable management and/or assessment of the trustworthiness of the IoT device.

By way of example, the management and/or assessment of the trustworthiness of the IoT device may be performed by the network entity acting as TaaS consumer/receiver/proxy or by another network entity interconnected to the network entity acting as TaaS consumer/receiver/proxy.

In a particular example, the network entity acting as TaaS consumer/receiver/proxy is a network node of an enterprise or associated IoT service provider for managing and/or evaluating the trustworthiness of a number of IoT devices associated with the enterprise.

For example, the IoT device may want to access an IoT application service or IoT connectivity service, and the automated request-response procedure may then be performed to enable assessment of the trustworthiness of the IoT device before granting access to the IoT application service or IoT connectivity service for the IoT device.

In a particular example scenario, the network entity acting as TaaS consumer/receiver/proxy or another network entity interconnected to the network entity acting as TaaS consumer/receiver/proxy comprises: at least one service provider network node for selectively providing a service to the IoT device in response to a service request from the IoT device, and/or an enterprise network node.

For example, said at least one service provider network node may comprise an application service provider network node for providing one or more IoT application services and/or a communication service provider network node for providing one or more IoT connectivity services.

In a first example, the network entity acting as TaaS consumer/receiver/proxy is the application service provider network node, which obtains the digital IoT certification proof for the IoT device from the IoT certification system acting as TaaS provider, and takes a decision whether to grant access to an IoT application service for the IoT device based on the digital IoT certification proof.

In a second example, the network entity acting as TaaS consumer/receiver/proxy is the communication service provider network node (or the enterprise network node) or an identity provider network node, which obtains the digital IoT certification proof for the IoT device from the IoT certification system acting as TaaS provider, and transfers the digital IoT certification proof to: the application service provider network node to enable the application service provider network node to take a decision whether to grant access to an IoT application service for the IoT device based on the digital IoT certification proof, and/or the enterprise network node for managing and/or evaluating the trustworthiness of the IoT device.

In a third example, the network entity acting as TaaS consumer/receiver/proxy is the communication service provider network node (or the enterprise network node), which obtains the digital IoT certification proof for the IoT device from the IoT certification system acting as TaaS provider, and transfers the digital IoT certification proof to the IoT device, for enabling the IoT device to transfer the digital IoT certification proof to: the application service provider network node for assessment of the trustworthiness of the IoT device before granting access to the IoT application service, and/or the enterprise network node for managing and/or evaluating the trustworthiness of the IoT device.

In a fourth example, the network entity acting as TaaS consumer/receiver/proxy is an identity provider network node, which obtains the digital IoT certification proof for the IoT device from the IoT certification system acting as TaaS provider, and transfers the digital IoT certification proof to the IoT device, for enabling the IoT device to transfer the digital IoT certification proof to: an application service provider network node for assessment of the trustworthiness of the IoT device before granting access to an IoT application service, and/or an enterprise network node for managing and/or evaluating the trustworthiness of the IoT device.

For example, the identity provider network node may also provide an identity assertion service for the IoT device and transfer the digital IoT certification proof together with an identity assertion proof to the IoT device.

Preferably, the IoT device is authenticated, e.g. as part of an overall procedure or in an independent procedure, although the proposed technology is at least partially applicable also for a non-authenticated device.

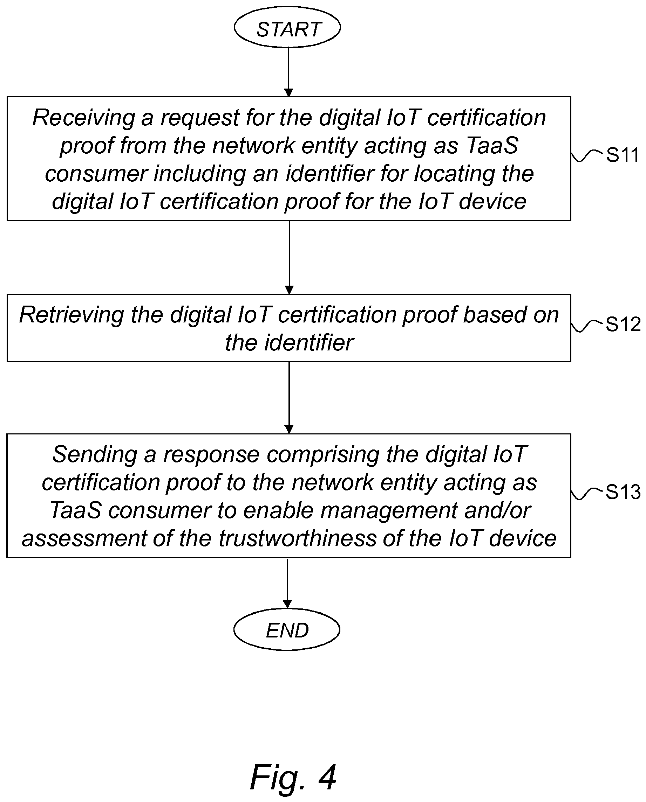

FIG. 4 is a schematic flow diagram illustrating an example of a method for supporting Internet of Things (IoT) Trustworthiness as a Service (TaaS) related to an IoT device, from the perspective of a network entity acting as TaaS provider.

According to a second aspect, there is provided a method for supporting Internet of Things (IoT) Trustworthiness as a Service (TaaS) related to an IoT device. The IoT device being arranged for connection to the Internet via a wired or wireless communication system. The method is based on an automated request-response procedure performed by an IoT certification system acting as TaaS provider to provide a digital IoT certification proof representative of the trustworthiness of the IoT device to a network entity acting as TaaS consumer, TaaS receiver or TaaS proxy, also referred to as TaaS consumer/receiver/proxy. The automated request-response procedure comprises:
S11: receiving a request for the digital IoT certification proof from the network entity acting as TaaS consumer/receiver/proxy including an identifier for locating the digital IoT certification proof for the IoT device;
S12: retrieving the digital IoT certification proof based on the identifier; and
S13: sending a response comprising the digital IoT certification proof to the network entity acting as TaaS consumer/receiver/proxy to enable management and/or assessment of the trustworthiness of the IoT device.

By way of example, the network entity acting as TaaS consumer/receiver/proxy may be a network node of an enterprise or associated IoT service provider for managing and/or evaluating the trustworthiness of a number of IoT devices associated with the enterprise.

For example, the network entity acting as TaaS consumer/receiver/proxy or another network entity interconnected to the network entity acting as TaaS consumer/receiver/proxy may comprise at least one service provider network node for selectively providing a service to the IoT device in response to a service request from the IoT device and/or an enterprise network node.

In another example, the network entity acting as TaaS consumer/receiver/proxy may be a network node of an identity provider for providing an identity assertion service for the IoT device.

In a particular example, the IoT device may want to access an IoT application service or IoT connectivity service, and the automated request-response procedure may then be performed to enable assessment of the trustworthiness of the IoT device before granting access to the IoT application service or IoT connectivity service for the IoT device.

Preferably, the digital IoT certification proof is retrieved from an IoT certification database associated with or included in the IoT certification system, using the identifier as a database query for looking up the digital IoT certification proof or at least the corresponding information needed to generate such a digital IoT certification proof.

The automated request-response procedure thus involves two complementary aspects, one performed by a requesting entity or system and another performed by a responding entity or system.

On the requesting side, a request for a digital IoT certification proof including an identifier for locating the digital IoT certification proof may be automatically generated, on-demand, e.g. in response to a TaaS service request from a service provider or an enterprise network node or as triggered by an IoT service request from an IoT device. The requesting entity or system will subsequently receive the requested digital IoT certification proof in a response from the responding entity or system.

On the responding side, the request for a digital IoT certification proof including the identifier for locating the digital IoT certification proof may be received and automatically processed to retrieve the digital IoT certification proof, and a response comprising the digital IoT certification proof is automatically generated and sent to the requesting side.

By way of example, the requesting side may involve the TaaS consumer/receiver/proxy, and the responding side may involve the IoT certification system acting as TaaS provider.

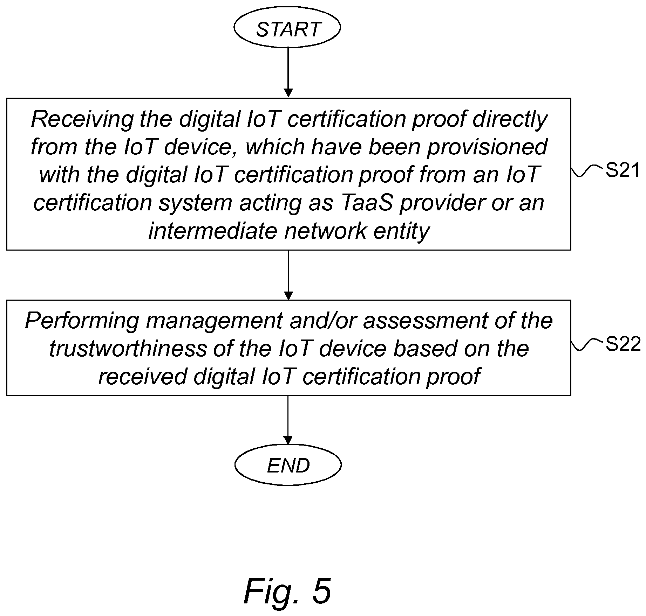

FIG. 5 is a schematic flow diagram illustrating another example of a method for supporting Internet of Things (IoT) Trustworthiness as a Service (TaaS) related to an IoT device, from the perspective of a network entity acting as TaaS consumer or receiver or proxy.

According to a third, there is provided a method for supporting Internet of Things (IoT) Trustworthiness as a Service (TaaS) related to an IoT device. The IoT device being arranged for connection to the Internet via a wired or wireless communication system. The method is performed by a network entity acting as TaaS consumer, TaaS receiver or TaaS proxy, also referred to as TaaS consumer/receiver/proxy, to obtain a digital IoT certification proof representative of the trustworthiness of the IoT device.

The method comprises:
S21: receiving the digital IoT certification proof directly from the IoT device, which has been provisioned with the digital IoT certification proof, from an IoT certification system acting as TaaS provider or an intermediate network entity relaying the digital IoT certification proof from the IoT certification system, based on an identifier for locating the digital IoT certification proof for the IoT device, and
S22: performing management and/or assessment of the trustworthiness of the IoT device.

For example, the network entity acting as TaaS consumer/receiver/proxy may be a network node of an enterprise or associated IoT service provider for managing and/or evaluating the trustworthiness of a number of IoT devices associated with the enterprise.

In a particular example, the IoT device may want to access an IoT application service or IoT connectivity service, and the network entity acting as TaaS consumer/receiver/proxy may then receive the digital IoT certification proof in connection with a service request from the IoT device to enable assessment of the trustworthiness of the IoT device before granting access to the IoT application service or IoT connectivity service for the IoT device.

As an example, the network entity acting as TaaS consumer/receiver/proxy or another network entity interconnected to the network entity acting as TaaS consumer/receiver/proxy may comprise at least one service provider network node for selectively providing a service to the IoT device in response to a service request from the IoT device and/or an enterprise network node.

For example, the at least one service provider network node comprises an application service provider network node for providing one or more IoT application services and/or or a communication service provider network node for providing one or more IoT connectivity services.

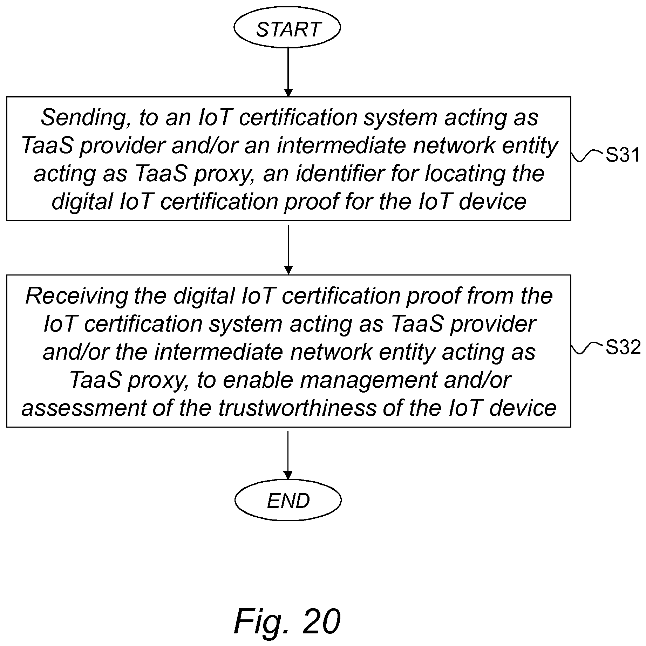

FIG. 20 is a schematic flow diagram illustrating an example of method for supporting Internet of Things (IoT) Trustworthiness as a Service (TaaS) related to an IoT device.

As previously mentioned, the IoT device is arranged for connection to the Internet via a wired or wireless communication system, and the method is performed by the IoT device to obtain a digital IoT certification proof representative of the trustworthiness of the IoT device.

The method comprises:
S31: sending, to an IoT certification system acting as TaaS provider and/or an intermediate network entity acting as TaaS proxy, an identifier for locating the digital IoT certification proof for the IoT device; and
S32: receiving the digital IoT certification proof from the IoT certification system acting as TaaS provider and/or the intermediate network entity acting as TaaS proxy, to enable management and/or assessment of the trustworthiness of the IoT device.

By way of example, the IoT device transfers the received digital IoT certification proof directly to: an application service provider network node for assessment of the trustworthiness of the IoT device before granting access to an IoT application service, and/or an enterprise network node for managing and/or evaluating the trustworthiness of the IoT device.

In general, with validity to all aspects discussed herein, one or more of the following features may be applicable:
By way of example, the digital IoT certification proof representative of the trustworthiness of the IoT device may include structured data (such as a data structure) including certification information about the brand, model, version and/or type of IoT device and/or information related to a concluded certification plan.

Optionally, the structured data may further include device-specific information for providing device profile information associated with the certification information.

In another example, the digital IoT certification proof may be digitally signed by a private key of the IoT certification system or an associated certification entity and/or includes a time stamp when the IoT certification proof was issued and/or a validity period.

For example, the private key may be a Public Key Infrastructure X. 509 (PKIX) key or similar key.

In yet another example, the identifier for locating the digital IoT certification proof for the IoT device may include an identifier of the IoT device or a pointer to the digital IoT certification proof for the IoT device.

Optionally, the identifier for locating the digital IoT certification proof for the IoT device may be related to the brand, model, version and/or type of IoT device and valid for multiple IoT devices, and/or a device-specific identifier of the IoT device and/or a device-specific pointer to the digital IoT certification proof.

In a particular example, the identifier for locating the digital IoT certification proof includes a Uniform Resource Identifier (URI) and/or Uniform Resource Locator (URL).

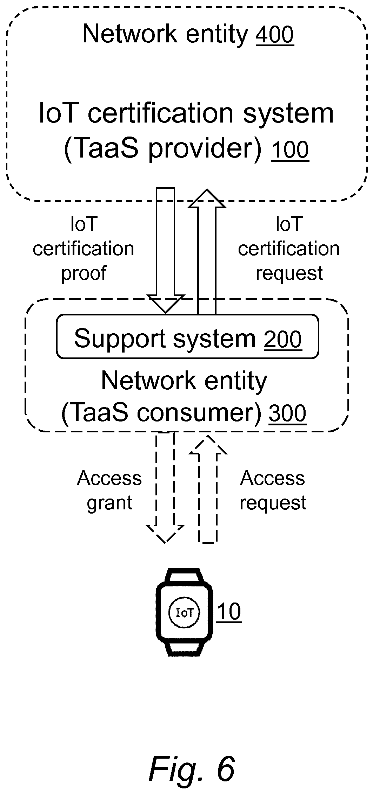

FIG. 6 is a schematic diagram illustrating an example of an overall IoT system involving an IoT certification system and an associated support system related to an IoT device.

In the example of FIG. 6, an IoT certification system 100 interacts with a support system 200 located in a network entity 300 acting as TaaS consumer or receiver or proxy. The IoT certification system 100 may for example be located in a network entity 400, such as a cloud-based network device or a network node of service provider such as a communication service provider.

The IoT certification system 100 is sometimes referred to as an IoT cybersecurity system, or an Online Cybersecurity Attestation for IoT Devices (OCAID) system. The IoT certification system may also be regarded as a system configured to provide IoT TaaS certification service(s) for one or more IoT devices.

As previously mentioned, IoT certification system 100 and support system 200 interacts based on an automated request-response procedure.

From the perspective of the support system 200, an IoT certification request message is automatically sent to the IoT certification system 100, and a response message comprising a digital IoT certification proof is subsequently received for enabling management and/or assessment of the trustworthiness of an IoT device 10.

From the perspective of the IoT certification system 100, the IoT certification request message is received from the support system 200, and the corresponding digital IoT certification proof is automatically retrieved and sent back to support system 200 in a response message to enable management and/or assessment of the trustworthiness of the IoT device 10.

For example, the IoT device 10 may want to access an IoT application service or IoT connectivity service, and the automated request-response procedure may then be performed to enable assessment of the trustworthiness of the IoT device before granting access to the IoT application service or IoT connectivity service for the IoT device.

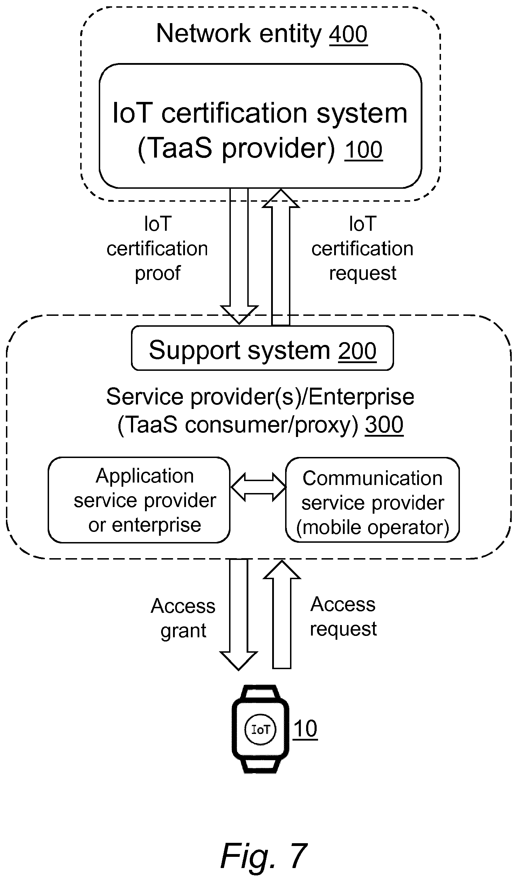

FIG. 7 is a schematic diagram illustrating another example of an overall IoT system involving an IoT certification system and an associated support system related to an IoT device.

For example, the network entity 300 acting as TaaS consumer/receiver/proxy or another network entity interconnected to the network entity acting as TaaS consumer/receiver/proxy may comprise at least one service provider network node for selectively providing a service to the IoT device in response to a service request from the IoT device and/or an enterprise network node.

For example, said at least one service provider network node may comprise an application service provider network node for providing one or more IoT application services and/or or a communication service provider network node for providing one or more IoT connectivity services.

Alternatively, the network entity 300 acting as TaaS consumer/receiver/proxy may be a network node of an enterprise that needs to obtain information about the trustworthiness of their fleet of IoT devices or a network node of an associated IoT service provider that provides such a service to the enterprise.

In yet another example, the network entity 300 acting as TaaS consumer/receiver/proxy may be an identity provider network node for providing an identity assertion service for the IoT device.

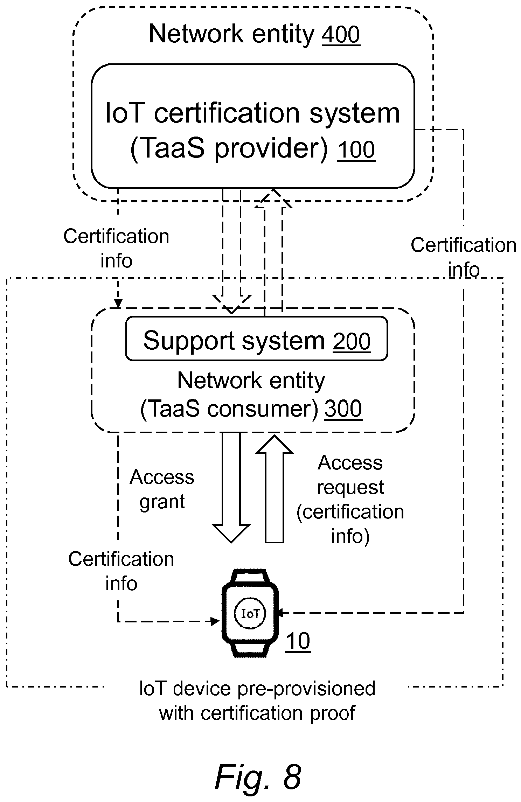

FIG. 8 is a schematic diagram illustrating yet another example of an overall IoT system involving an IoT certification system and an associated support system related to an IoT device.

In this particular example, the IoT device 10 has been pre-provisioned with the digital IoT certification proof (certification info) from the IoT certification system 100 acting as TaaS provider or an intermediate network entity 300 relaying the digital IoT certification proof from the IoT certification system 100.

Once provisioned with the IoT certification proof, the IoT device 10 may request access to an IoT service and include the IoT certification proof (certification info) in the access request message. In other words, the network entity 300 may receive the digital IoT certification proof directly from the IoT device 10 to enable management and/or assessment of the trustworthiness of the IoT device.

By way of example, the management and/or assessment of the trustworthiness of the IoT device may be performed by the network entity 300 acting as TaaS consumer/receiver/proxy or another network entity interconnected to the network entity acting as TaaS consumer/receiver/proxy.

As an example, the network entity 300 acting as TaaS consumer/receiver/proxy or another network entity interconnected to the network entity acting as TaaS consumer/receiver/proxy may comprise at least one service provider network node for selectively providing a service to the IoT device in response to a service request from the IoT device and/or an enterprise network node.

Alternatively, the network entity 300 acting as TaaS consumer/receiver/proxy may be a network node of an enterprise or associated IoT service provider for managing and/or evaluating the trustworthiness of a number of IoT devices associated with the enterprise.

For a better understanding, the proposed technology will now be described with reference to one or more non-limiting examples.

In some sense, there is proposed a service that makes available in real-time the trustworthiness of an IoT device by presenting, on certification, proof which a specific device of a given brand and model has received after passing an IoT certification process. Preferably, the certification proof may be structured data digitally signed by a certification body providing information about the specific brand, model and version together with references to the passed test plan.

The service can be accessed using any of a number of different identifiers that can uniquely locate the specific brand-model-version that has passed certification. The certification proof can also be directly accessible using a permanent URI/URL that the certification body has assigned to the specific brand-model-version.

A trustworthiness service can use this underlying certification service as baseline trustworthiness for the device brand/model and additionally collect device specific information from other internal and external sources - such as device management and/or Shodan - in order to provide a more complete device profile that can be used to assess the overall trustworthiness of a concrete connected IoT device.

Such a trustworthiness service could be beneficial in situations like:
1. Automation and scalability. With the increasing usage of IoT devices in the order of billions, assessing their trustworthiness on-line in real-time will become a necessity that cannot otherwise be achieved using off-line business and trust processes or human-based procedures. The proposed trustworthiness service enables automation of trustworthiness establishment.
2. Enterprises managing their own IoT devices, or enterprises that outsource the management of their device fleet to a third party like Ericsson Device Connection Platform (DCP), would always have an updated status of certification of the managed device fleet by contacting the trustworthiness service to get information about their devices or by subscribing to notifications from the Trustworthiness service. Such information would help the enterprise or the outsourcing third party in having an overall risk assessment of the managed device fleet on a per device model basis. If a service provider would need certification information about the connected IoT device, the enterprise, subject to business agreement, could forward the certification proof or the service provider may decide to contact the certification service directly.
3. Communication service providers (such as mobile operators) could use the certification status of the connecting device as one parameter in measuring the device trustworthiness and apply connectivity policies accordingly or even offer trustworthiness as a service to application service providers and enterprises.
4. Application service providers could use the certification status of a connecting device as one parameter in measuring the device trustworthiness and apply service policies accordingly.
5. Advanced IoT devices could present the certification profile themselves when requesting access to a service such as connectivity or application services.
6. Vendors would become interested in certifying their IoT devices so that the certification result could be made available on-line to reputation and trustworthiness services.
7. Communication service providers could offer such a trustworthiness service as part of an IoT cloud service using as sources of trustworthiness determination one or more of the following underlying services: connectivity services, device data management services, security management services and cybersecurity testing and certification services.

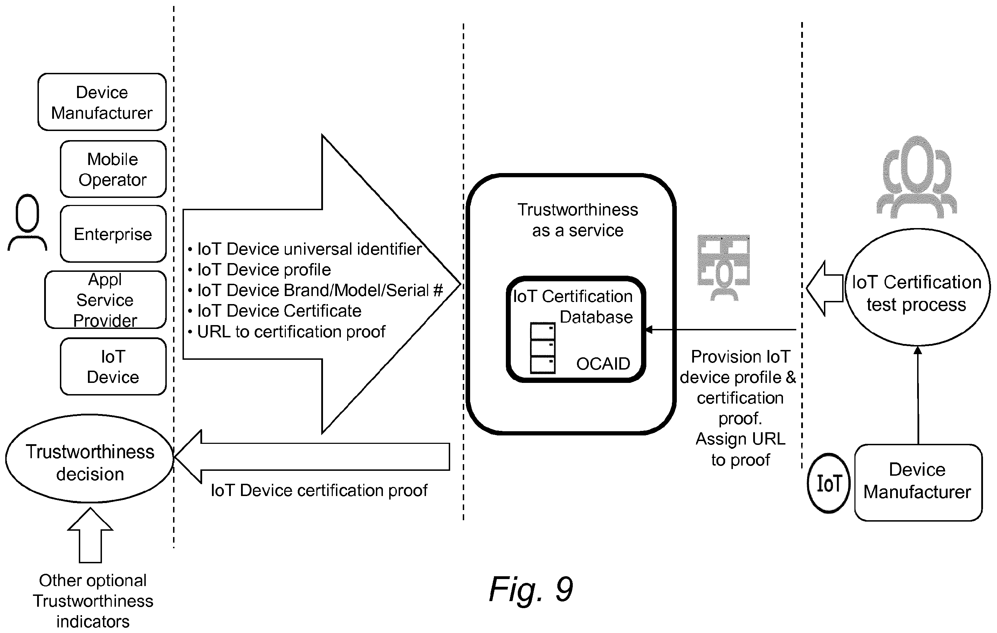

FIG. 9 is a schematic diagram illustrating an example of a basic IoT Trustworthiness as a Service building block as well as examples of involved actors and interfaces. It may be assumed that the online TaaS service should have high availability for business continuity.

On the right-hand side, the IoT certification center conducts IoT device certification by request from one or more IoT device manufacturers. The IoT certification center delivers the result of the certification to a central IoT certification system (or certification body) that implements the TaaS service and provisions its IoT certification database with device brand, model, version and certification level, among other information. The central IoT certification system for IoT TaaS is sometimes referred to as an IoT cybersecurity system, or an Online Cybersecurity Attestation for IoT Devices (OCAID) system.

On the left-hand side, consumers of the TaaS or certification service are shown such as enterprises, mobile operators, application service providers, or even devices. They can then fetch a digitally signed certification proof, using any of a number of different types of identifiers.

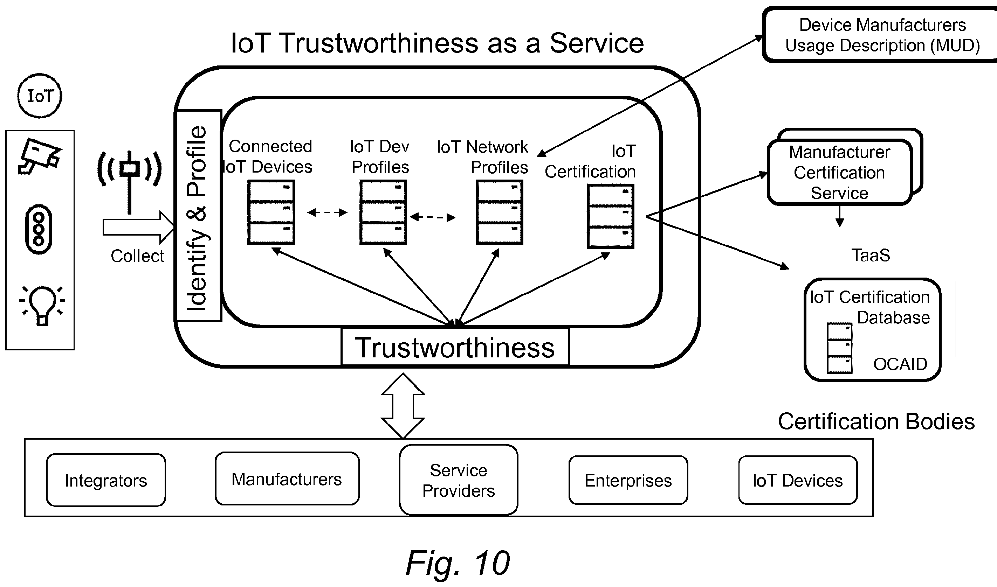

FIG. 10 is a schematic diagram illustrating an example of IoT Trustworthiness as a Service collecting information from one or more underlying services, internal and/or external, that serve as indicators of trust, in order to provide certification of trustworthiness. For example, such an IoT TaaS service can be operated by an enterprise managing its own fleet of IoT devices, or by a communication service provider such as a mobile operator offering a bundle of IoT services to enterprises such as connectivity, device management and TaaS. The TaaS can also be offered by a third party as a cloud service towards enterprises, services providers or mobile operators. Many other realizations are also possible. In other words, IoT TaaS may be offered as a service, e.g. based on IoT certification from authorized bodies and/or other industry players to retrieve the results of a certification process of a specific device brand-model-version plus other optional internal/external trustworthiness information.

Accordingly, the proposed technology offers a conceptual solution as a service platform, which may aggregate various information sources such as certification status, monitored network traffic behavior, brand/model/firmware reputation, digital fingerprint in IoT reputation services that together provide a trustworthiness indicator.

By way of example, an identity and profile function may be used to identify the connecting IoT device, either explicitly, e.g. using some authentication protocol like Transport Layer Security (TLS), or implicitly using e.g. deep packet inspection, fingerprinting and/or traffic profiling. Identified connected devices may be kept in a database of connected devices. A network profiling function may also fetch a profile from an external source, e.g. based on ID, or build it on the fly.

For example, an attestation function may be used to return attestation information about a connected device, e.g. given an IP address or IMSI/MSISDN. The returned information can be, e.g. certification status, device profile or device network profile or Manufacturer Usage Description (MUD) conformance/deviation. This function can also use external certification information from a certification body, e.g. CTIA or manufacturer. For example, the function may resolve the device IP or MSISDN into brand, model and/or version using an internal IoT device profile database.

As mentioned, exemplary use cases may include:
- An application service provider wants to know whether an IoT connected device is "trustable" before granting access to some premium service.
- A communication service provider such as a mobile operator wants to know whether an IoT device is trustable before granting connectivity (with high QoS).
- An enterprise wants to know whether their IoT fleet in operations is trustable.
- A manufacturer wants to know how trustable their products are on the field.

In the following, the main focus will be on the TaaS service aspects of the proposed technology, and not primarily on conventional aspects of establishing implicit and/or explicit trust relations between interconnected entities, nor on well-accepted authentication procedures.

For example, a trust relation between two interconnected entities or network units may be established, e.g. by using symmetric or asymmetric cryptographic technologies. In the latter case, the Public Key Infrastructure (PKI) technology may be employed, e.g. using a private key to generate a digital signature, which may be verified or validated by a corresponding public key, and/or using the public key to generate encrypted data, which may be decrypted by the corresponding private key. Useful implicit and/or explicit trust relations may be indicated in the figures.

By way of example, authentication of a device such as an IoT device may be performed by using well-accepted Transport Layer Security (TLS) and/or Authentication and Key Agreement (AKA) protocols, and/or any other suitable device authentication procedure and/or by using federated identity assertion services such as Open ID, Security Assertion Markup Language (SAML) or the authorization service OAUTH. Preferably, the IoT device is authenticated at some point. It should though be understood that the general procedure(s) described herein are applicable for authenticated and non-authenticated IoT devices.

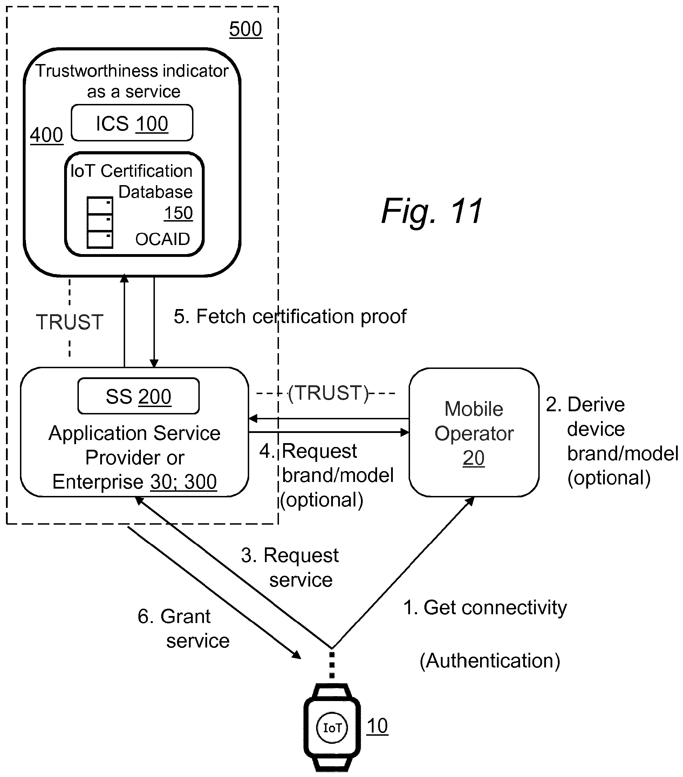

FIG. 11 is a schematic diagram illustrating an example of a scenario and system overview in which an application service provider or enterprise is a consumer or receiver of the TaaS service.

As an example, this scenario may relate to a situation whereby the consumer of the IoT TaaS service is an application service provider 30 that optionally may need support from a communication service provider 20 such as a mobile operator. For example, this would imply that the application service provider 30 or enterprise node includes a support system 200 configured to support IoT TaaS, with the possibility of interfacing an IoT Certification System (ICS) 100 acting as TaaS provider having an associated IoT certification database 150. The ICS system 100 may be included in a network entity 400 such as a network node and/or cloud-based network device. In a particular example, the network entity 400 is an integrated part of the overall service provider system 500 such as the application service provider system.

By way of example, the following operational procedure may be used:
1. Device 10 gets mobile connectivity.
2. Operator optionally derives brand/model, e.g. using fingerprinting, IMEI/IMSI or explicitly.
3. Device requests access to an application service provider. The device may present information such as:
   - Device identity and/or device profile.
   - Device digital certificate.
   - URI/URL to certification proof.
   Alternatively, an enterprise node may communicate with the IoT device for management and/or evaluation of trustworthiness.
4. If the application service provider 30 does not have enough device information, it may optionally request and obtain such information from the operator 20, e.g. using the device IP address as pseudo ID.
5. The application service provider 30 or enterprise node (using the support system 200) contacts the IoT TaaS service of the ICS system 100 to fetch the certification proof. The certification proof may be signed by the ICS acting as TaaS provider or an associated certification entity, thus ensuring the possibility of validating the origin, integrity and/or authenticity of the certification proof.
6. The application service provider 30 analyzes the certification proof, possibly with other information, and decides whether to grant access to the requested service. Alternatively, the enterprise node may manage and/or evaluate trustworthiness of the IoT device based on the received IoT certification proof.

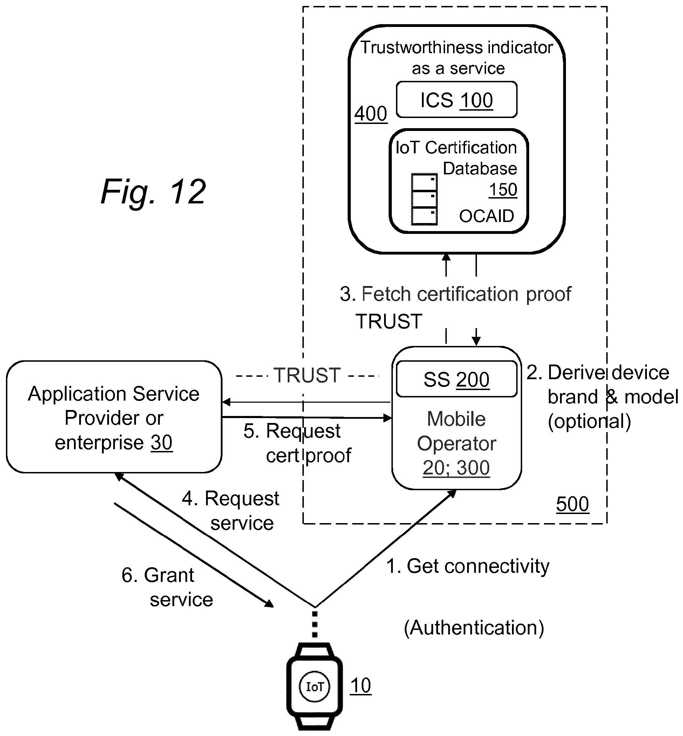

FIG. 12 is a schematic diagram illustrating an example of a scenario and system overview in which a communication service provider such as a mobile operator is a consumer or receiver or proxy of the TaaS service.

As an example, this scenario may relate to a situation whereby the consumer of the IoT TaaS service is a communication service provider 20 such as a mobile operator that acts as a trust relay or trusted/relying entity towards one or more application service providers 30. For example, this would imply that the communication service provider 20 includes a support system 200 configured to support IoT TaaS, with the possibility of interfacing an IoT Certification System (ICS) 100 acting as TaaS provider having an associated IoT certification database 150. The ICS system 100 may be included in a network entity 400 such as a network node and/or cloud-based network device. In a particular example, the network entity 400 is an integrated part of the overall service provider system 500 such as the mobile operator system.

By way of example, the following operational procedure may be used:
1. An IoT device 10 gets mobile data connectivity from a network mobile operator 20.
2. Optionally, the operator 20 uses, e.g. the IMEI/IMSI or any other device identifier to derive the brand and model. Alternatively, the operator 20 may explicitly request device profile information from the device.
3. The operator 20 (using the support system 200) requests and fetches the certification proof from IoT TaaS service of the ICS system 100. The certification proof may be signed by the ICS acting as TaaS provider or an associated certification entity, thus ensuring the possibility of validating the origin, integrity and/or authenticity of the certification proof.
4. Later, the application service provider 30 may be contacted by the device 10, which requests access to a service, or an enterprise node may communicate with the IoT device for management and/or evaluation of trustworthiness.
5. The application service provider 30 or enterprise node may use the device IP address or similar identifier to locate the mobile operator 20 and request the corresponding certification proof.
6. Using the certification proof, the application service provider 30 may decide whether to grant access to the service. Alternatively, the enterprise node may manage and/or evaluate trustworthiness of the IoT device based on the received IoT certification proof.

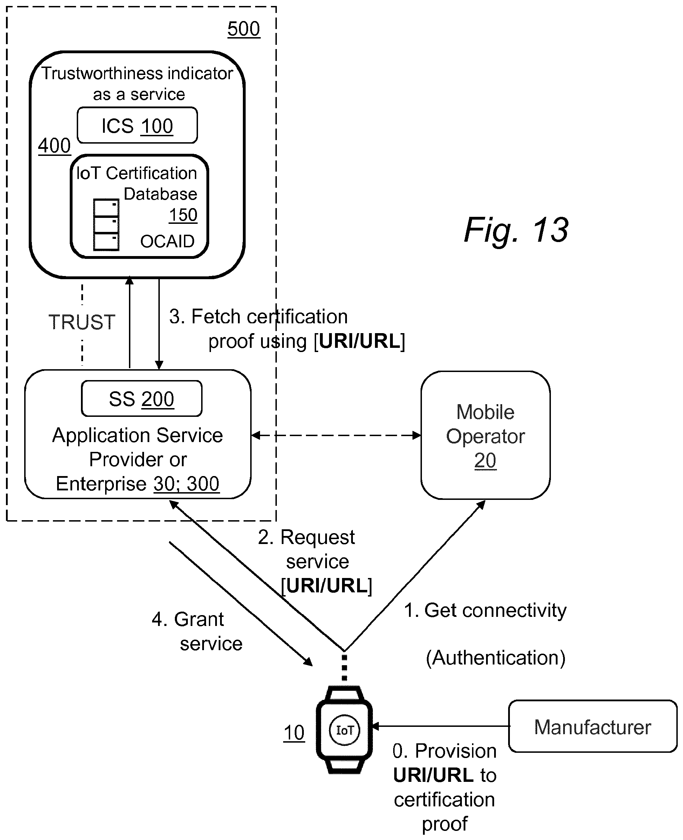

FIG. 13 is a schematic diagram illustrating another example of a scenario and system overview in which an application service provider or enterprise is a consumer or receiver of the TaaS service.

In this example, the application service provider 30 or enterprise node includes a support system 200 configured to support IoT TaaS, with the possibility of interfacing an IoT Certification System (ICS) 100 acting as TaaS provider having an associated IoT certification database 150. The ICS system 100 may be included in a network entity 400 such as a network node and/or cloud-based network device. In a particular example, the network entity 400 is an integrated part of the overall service provider system 500 such as the application service provider system.

By way of example, the following operational procedure may be used:
0. The device is pre-provisioned, e.g. by a manufacturer with a perma-link such as a URI/URL to the certification proof.
1. The device 10 gets connectivity.
2. The device 10 requests access to a service of the application service provider 30 and may present the URI/URL pointing to the certification proof.
3. The application service provider 30 (using the support system 200) or enterprise node may request and fetch the certification proof from IoT TaaS service of the ICS system 100 using the URI/URL. The certification proof may be signed by the ICS acting as TaaS provider or an associated certification entity, thus ensuring the possibility of validating the origin, integrity and/or authenticity of the certification proof.
4. Based on the certification proof, the application service provider 30 may decide whether to grant access to the service. Alternatively, the enterprise node may manage and/or evaluate trustworthiness of the IoT device based on the received IoT certification proof.

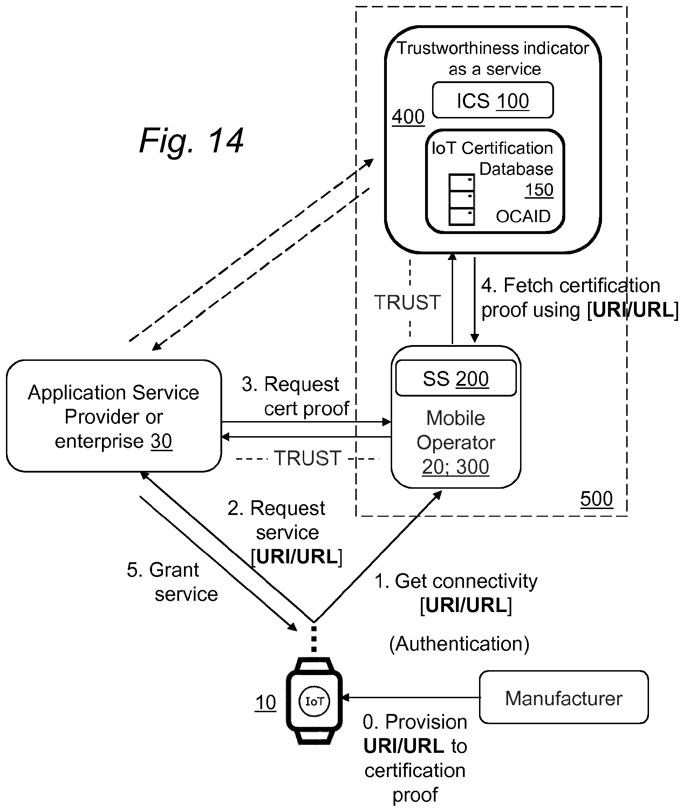

FIG. 14 is a schematic diagram illustrating another example of a scenario and system overview in which a communication service provider such as a mobile operator is a consumer or receiver or proxy of the TaaS service.

In this example, the communication service provider 20 includes a support system 200 configured to support IoT TaaS, with the possibility of interfacing an IoT Certification System (ICS) 100 acting as TaaS provider having an associated IoT certification database 150. The ICS system 100 may be included in a network entity 400 such as a network node and/or cloud-based network device. In a particular example, the network entity 400 is an integrated part of the overall service provider system 500 such as the mobile operator system.

By way of example, the following operational procedure may be used:
0. The device is pre-provisioned, e.g. by a manufacturer with a perma-link such as a URI/URL to the certification proof.
1. Upon getting connected, the device 10 may present the URI/URL pointing to the certification proof.
2. The device requests access to a service from the application service provider 30.
3. The application service provider 30 or enterprise node may use the operator 20 as a trust relay, e.g. using the device IP address as pseudo ID, and request the certification proof.
4. The operator 20 (using the support system 200) acts as a trust relay and fetches the corresponding certification proof from the ICS system 100, and forwards the proof to the application service provider or enterprise node. The certification proof may be signed by the ICS acting as TaaS provider or an associated certification entity, thus ensuring the possibility of validating the origin, integrity and/or authenticity of the certification proof.
5. Based on the proof, the application service provider 30 may decide whether to grant access to the service. Alternatively, the enterprise node may manage and/or evaluate trustworthiness of the IoT device based on the received IoT certification proof.

Alternatively, an identity provider for providing an identity assertion service for the IoT device acts as the consumer or receiver or proxy of the TaaS service. The application service provider 30 or enterprise node may thus use the identity provider as the trust relay, whereby the identity provider relays both an identity assertion as well as the certification proof of trustworthiness.

In other words, the examples of FIG. 13 and/or FIG. 14 may relate to a situation whereby the IoT device is provisioned with a URI/URL pointing to the certification proof stored in the certification database 150. For example, the device may present the URI/URL upon getting connectivity to the communication service provider such as a mobile operator or upon requesting access to an IoT application service. For example, the application service provider 30 may access the IoT TaaS service directly (FIG. 13) or use the mobile operator 20 (FIG. 14) as a trust relay for fetching the certification proof.

In those cases, when the mobile operator or similar communication service provider is used as a trust relay, the application service provider has a trust relationship with both the mobile operator and the IoT certification system.

For example, the URI/URL may be a permanent one, provisioned as part of the device credentials, e.g. as an embedded extension in, or add-on to, the digital (PKI) certificate of the device, so that the URI/URL is available when the IoT device is authenticated to the application service provider e.g. using TLS.

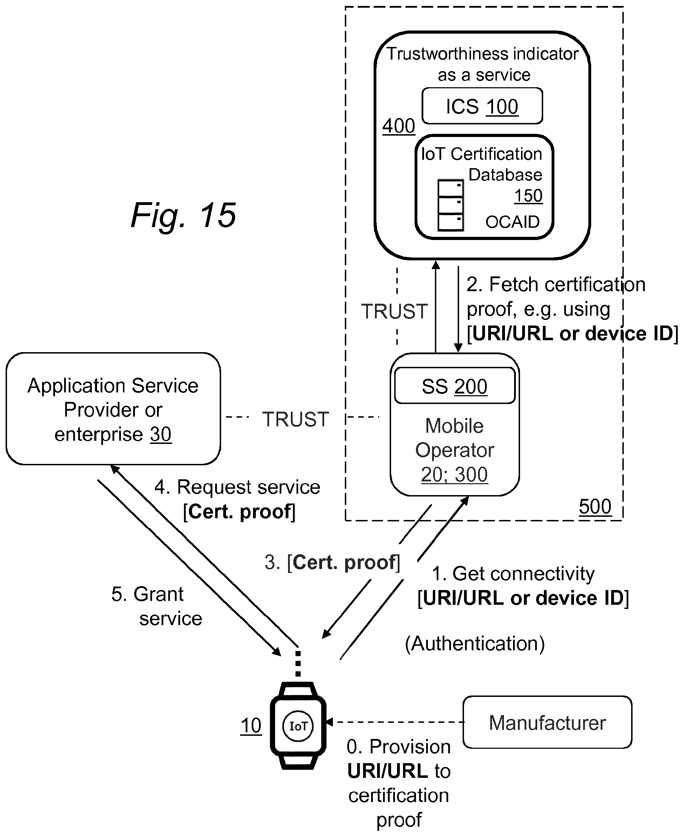

FIG. 15 is a schematic diagram illustrating an example of a scenario and system overview in which a communication service provider such as a mobile operator acts as a proxy of the TaaS service to provision the IoT device with a certification proof, which can subsequently be used with an application service provider and/or enterprise.

As an example, this scenario may relate to a situation whereby advanced IoT devices can obtain the certification proof themselves or via an intermediary (such as the mobile operator or any other authorized actor to get the proof) using the URI/URL mentioned previously or any other identifier such a device ID. In order to ensure freshness of the proof, the trustworthiness service could issue a signed proof containing a time stamp when the proof was issued and/or a validity period, so that the trustworthiness consumer does not get outdated proof information. Note that the master copies of all the proofs preferably reside in the certification database and local copies of the proofs are only temporal ones with a limited validity period. The IoT device 10 may also cache the certification proof in the device itself, so that the device would not need to fetch the proof each time upon request.

By way of example, the following operational procedure may be used:
0. Optionally, the device 10 may be pre-provisioned, e.g. by a manufacturer with a perma-link such as a URI/URL to the certification proof.
1. Upon getting connected, the device 10 may present the URI/URL pointing to the certification proof or a device ID or similar identifier pointing to the certification proof.
2. The operator 20 (using the support system 200) may fetch the corresponding certification proof from the ICS system 100 using the obtained identifier. The certification proof may be signed by the ICS acting as TaaS provider or an associated certification entity, thus ensuring the possibility of validating the origin, integrity and/or authenticity of the certification proof.
3. The operator 20 then provisions the IoT device 10 with the certification proof, by transferring the digital certification proof to the device 10.
4. The device transfers the certification proof directly to the application service provider 30 when requesting access to a service, or to the enterprise node.
5. Based on the proof, the application service provider 30 may decide whether to grant access to the service. Alternatively, the enterprise node may manage and/or evaluate trustworthiness of the IoT device based on the received certification proof.

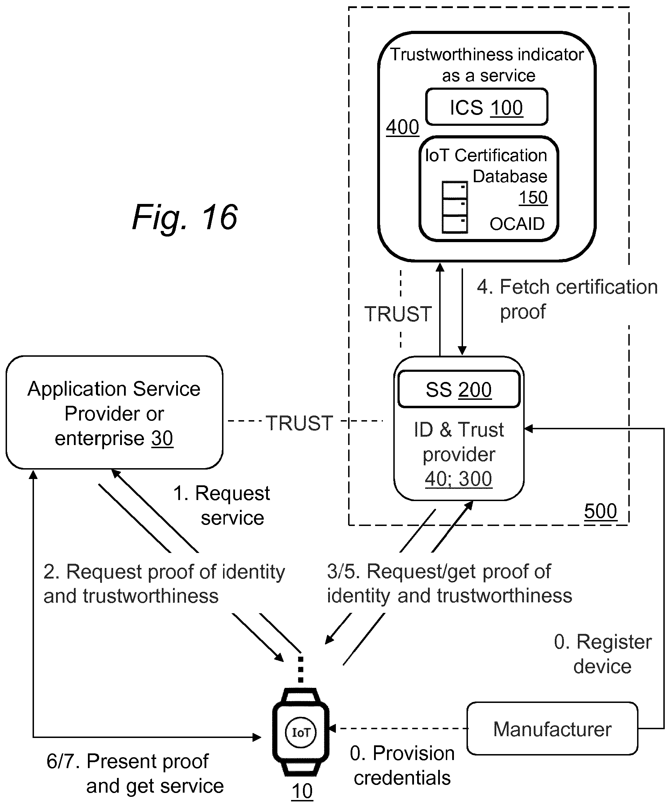

FIG. 16 is a schematic diagram illustrating an example of a scenario and system overview in which an identity and trust(worthiness) provider acts as a proxy of the TaaS service to provision the IoT device with a proof of identity and trustworthiness, which can subsequently be used, e.g. with an application service provider and/or enterprise.

In a particular example, the IoT device may be part of some identity federation arrangement, such as OpenID, SAML or OAUTH, whereby the application service provider or enterprise node redirects the IoT device to an identity provider and the device directly authenticates with the identity provider getting as a result a signed identity assertion that the device can then present to the application service provider or enterprise node. Such an identity assertion may also include the digital IoT certification proof. To achieve this, the identity provider would need to contact the IoT certification system acting as TaaS service provider, e.g. during device authentication, to obtain the digital IoT certification proof. Such an embodiment can be referred to as federated trustworthiness.

By way of example, the following operational procedure may be used:
0. The manufacturer provisions devices credentials, and the device is being registered at the identity provider, also referred to as an identity and trustworthiness provider.
1. The IoT device 10 requests a service.
2. The application service provider 30 or enterprise node redirects the IoT device to the identity provider 40 requesting proof of identity and trustworthiness.
3. The IoT device 10 contacts the identity provider 40 to request proof of identity as well as trustworthiness.
4. The identity provider 40 contacts the ICS system 100 acting as a TaaS provider to fetch the digital IoT certification proof of trustworthiness. The certification proof may be signed by the ICS acting as TaaS provider or an associated certification entity, thus ensuring the possibility of validating the origin, integrity and/or authenticity of the certification proof.
   The identity provider 40 also provides a proof of identity, i.e. regular identity assertion.
5. The IoT device 10 gets the proof of identity as well as the digital IoT certification proof of trustworthiness. The proof of identity may be transferred from the identity provider 40 to the IoT device 10 together with the digital IoT certification proof of trustworthiness, e.g. with the digital IoT certification proof embedded in the proof identity or as an extension, or with the digital IoT certification proof being transferred in a separate message.
6. The IoT device 10 presents the proof of identity and the digital IoT certification proof to the application service provider 30 or enterprise node.
7. The application service provider 30 evaluates the proof of identity and the digital IoT certification proof of trustworthiness and may then decide whether to grant access to the service. Alternatively, the enterprise node may manage and/or evaluate trustworthiness of the IoT device based on the received IoT certification proof.

As an example, a communication service provider such as a mobile operator may act as the identity provider, with the required functionality implemented for providing an identity assertion service. Alternatively, the identity provider is a separate service provider.

It will be appreciated that the methods and arrangements described herein can be implemented, combined and re-arranged in a variety of ways.

For example, embodiments may be implemented in hardware, or in software for execution by suitable processing circuitry, or a combination thereof.

The steps, functions, procedures, modules and/or blocks described herein may be implemented in hardware using any conventional technology, such as discrete circuit or integrated circuit technology, including both general-purpose electronic circuitry and application-specific circuitry.

Alternatively, or as a complement, at least some of the steps, functions, procedures, modules and/or blocks described herein may be implemented in software such as a computer program for execution by suitable processing circuitry such as one or more processors or processing units. The terms "processing circuitry" and "processor" may be used interchangeably in parts of this disclosure.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

According to an aspect, there is provided an Internet of Things (IoT) certification system configured to support IoT Trustworthiness as a Service (TaaS) related to an IoT device. The IoT device is arranged for connection to the Internet via a wired or wireless communication system.

The IoT certification system is configured to operate based on an automated request-response procedure to provide a digital IoT certification proof representative of the trustworthiness of the IoT device to a requesting network entity. The IoT certification system is further configured to receive a request for the digital IoT certification proof from the requesting network entity including an identifier for locating the digital IoT certification proof for the IoT device. The IoT certification system is also configured to retrieve the digital IoT certification proof based on the identifier. The IoT certification system is configured to send a response comprising the digital IoT certification proof to the requesting network entity to enable management and/or assessment of the trustworthiness of the IoT device.

By way of example, the IoT device may want to access an IoT application service or IoT connectivity service, and the IoT certification system may be configured to operate based on the automated request-response procedure to enable assessment of the trustworthiness of the IoT device before granting access to the IoT application service or IoT connectivity service for the IoT device.

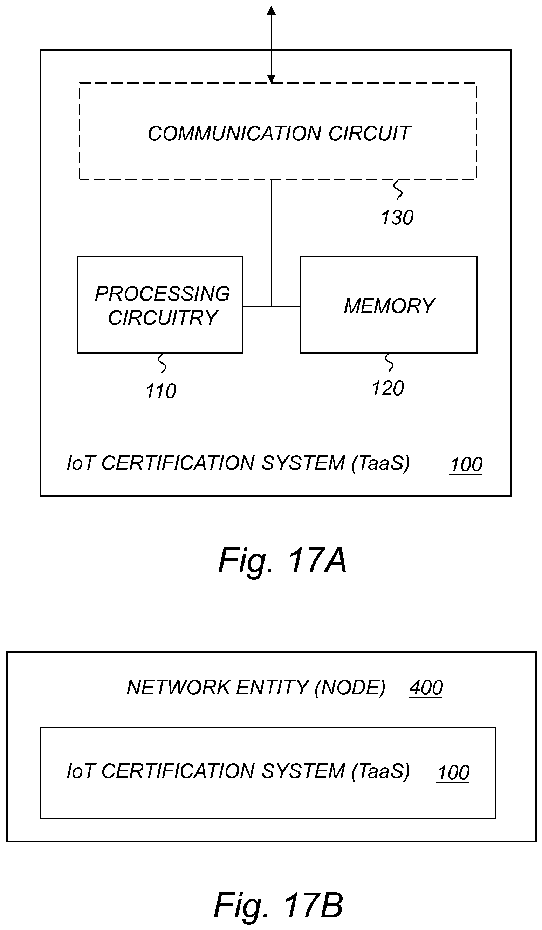

FIG. 17A is a schematic block diagram illustrating an example of an IoT certification system according to an embodiment.

In this particular example, the IoT certification system 100 comprises processing circuitry 110 including one or more processors and a memory 120, the memory 120 comprising instructions executable by the processing circuitry 110, whereby the processing circuitry is operative to perform at least some of the steps, actions and/or functions described herein, including the operations of the IoT certification system 100.

Optionally, the IoT certification system 100 may also include a communication circuit 130. The communication circuit 130 may include functions for wired and/or wireless communication with other devices and/or network nodes in the network. In a particular example, the communication circuit 130 may be based on radio circuitry for communication with one or more other nodes, including transmitting and/or receiving information. The communication circuit 130 may be interconnected to the processing circuitry 110 and/or memory 120. By way of example, the communication circuit 130 may include any of the following: a receiver, a transmitter, a transceiver, input/output (I/O) circuitry, input port(s) and/or output port(s).

FIG. 17B is a schematic block diagram illustrating an example of a network entity (node) 400 comprising an IoT certification system 100 according to an embodiment.

For example, the network entity 400 may be a cloud-based network node.

In a particular example, the network entity 400 may be an integrated part of a service provider system. By way of example, the service provider system may be a communication service provider system or an application service provider system.

According to another aspect, there is provided a system configured to support Internet of Things (IoT) Trustworthiness as a Service (TaaS) related to an IoT device. The IoT device is arranged for connection to the Internet via a wired or wireless communication system.

The system may be configured to operate based on an automated request-response procedure to obtain a digital IoT certification proof representative of the trustworthiness of the IoT device from an IoT certification system. The system may be configured to request the digital IoT certification proof from the IoT certification system based on an identifier for locating the digital IoT certification proof for the IoT device. The system may also be configured to receive a response comprising the digital IoT certification proof from the IoT certification system to enable management and/or assessment of the trustworthiness of the IoT device.

By way of example, the IoT device may want to access an IoT application service or IoT connectivity service, and the system may be configured to operate based on the automated request-response procedure to enable assessment of the trustworthiness of the IoT device before granting access to the IoT application service or IoT connectivity service for the IoT device.

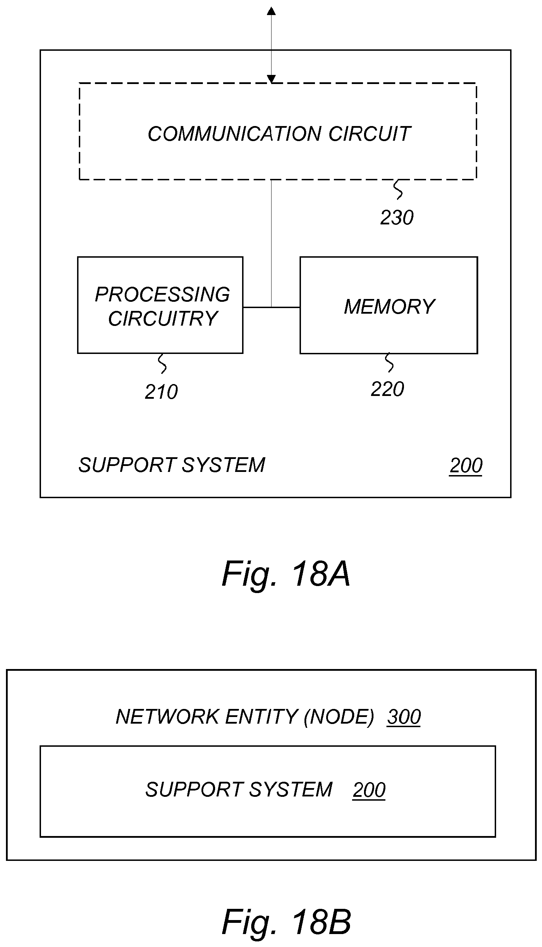

FIG. 18A is a schematic block diagram illustrating an example of an IoT TaaS support system according to an embodiment.

In this particular example, the support system 200 comprises processing circuitry 210 including one or more processors and a memory 220, the memory 220 comprising instructions executable by the processing circuitry 210, whereby the processing circuitry is operative to perform at least some of the steps, actions and/or functions described herein, including the operations of the support system 200.

Optionally, the support system 200 may also include a communication circuit 230. The communication circuit 230 may include functions for wired and/or wireless communication with other devices and/or network nodes in the network. In a particular example, the communication circuit 230 may be based on radio circuitry for communication with one or more other nodes, including transmitting and/or receiving information. The communication circuit 230 may be interconnected to the processing circuitry 210 and/or memory 220. By way of example, the communication circuit 230 may include any of the following: a receiver, a transmitter, a transceiver, input/output (I/O) circuitry, input port(s) and/or output port(s).

FIG. 18B is a schematic block diagram illustrating an example of a network entity (node) 300 comprising an IoT TaaS support system 200 according to an embodiment.

By way of example, the network entity 300 may include an enterprise network node or associated IoT service provider, an application service provider network node for providing one or more IoT application services and/or or a communication service provider network node for providing one or more IoT connectivity services, and/or an identity provider network node (40) for providing an identity assertion service for the IoT device.

For example, the network entity 300 may be an enterprise network node or associated IoT service provider, which is configured to manage and/or evaluate the trustworthiness of a number of IoT devices associated with the enterprise.

In a particular example, the network entity 300 may be an application service provider network node, which is configured to obtain the digital IoT certification proof for the IoT device from the IoT certification system, and take a decision whether to grant access to an IoT application service for the IoT device based on the digital IoT certification proof.

Alternatively, the network entity 300 may be a communication service provider network node (or enterprise network node) or the identity provider network node, which is configured to obtain the digital IoT certification proof for the IoT device from the IoT certification system and transfer the digital IoT certification proof to: the application service provider network node to enable the application service provider network node to take a decision whether to grant access to an IoT application service for the IoT device based on the digital IoT certification proof, and/or the enterprise network node for managing and/or evaluating the trustworthiness of the IoT device.

The network entity 300 may also be a communication service provider network node (or enterprise network node), which is configured to obtain the digital IoT certification proof for the IoT device from the IoT certification system, and transfer the digital IoT certification proof to the IoT device, for enabling the IoT device to transfer the digital IoT certification proof to: the application service provider network node for assessment of the trustworthiness of the IoT device before granting access to the IoT application service, and/or the enterprise network node for managing and/or evaluating the trustworthiness of the IoT device.

According to yet another example, the network entity may be the identity provider network node, which is configured to obtain the digital IoT certification proof for the IoT device from the IoT certification system, and transfer the digital IoT certification proof to the IoT device, for enabling the IoT device to transfer the digital IoT certification proof to: the application service provider network node for assessment of the trustworthiness of the IoT device before granting access to an IoT application service, and/or the enterprise network node for managing and/or evaluating the trustworthiness of the IoT device.

By way of example, the network entity 300 may be a cloud-based network node.

According to yet another aspect, there is provided a system configured to support Internet of Things (IoT) Trustworthiness as a Service (TaaS) related to an IoT device. The IoT device is arranged for connection to the Internet via a wired or wireless communication system.

The system is configured to obtain a digital IoT certification proof representative of the trustworthiness of the IoT device by receiving the digital IoT certification proof directly from the IoT device, which have been provisioned with the digital IoT certification proof from an IoT certification system or an intermediate network entity relaying the digital IoT certification proof from the IoT certification system based on an identifier for locating the digital IoT certification proof for the IoT device, to enable management and/or assessment of the trustworthiness of the IoT device.

By way of example, the IoT device may want to access an IoT application service or IoT connectivity service, and the system may be configured to operate based on the automated request-response procedure to enable assessment of the trustworthiness of the IoT device before granting access to the IoT application service or IoT connectivity service for the IoT device.

With reference once again to FIG. 18A, the support system 200 may comprise processing circuitry 210 including one or more processors and a memory 220, the memory 220 comprising instructions executable by the processing circuitry 210, whereby the processing circuitry is operative to perform at least some of the steps, actions and/or functions described herein, including the operations of the support system 200.

With reference once again to FIG. 18B, there is also provided a network entity 300 comprising such a system 200 configured to support Internet of Things (IoT) Trustworthiness as a Service (TaaS) related to an IoT device.

In yet another aspect, there is provided an Internet of Things (IoT) device configured to support an IoT Trustworthiness as a Service (TaaS) related to the IoT device. The IoT device being arranged for connection to the Internet via a wired or wireless communication system. The IoT device is configured to obtain a digital IoT certification proof representative of the trustworthiness of the IoT device.

For this purpose, the IoT device is configured to send, to an IoT certification system acting as TaaS provider and/or an intermediate network entity acting as TaaS proxy, an identifier for locating the digital IoT certification proof for the IoT device. The IoT device is further configured to receive the digital IoT certification proof from the IoT certification system acting as TaaS provider and/or the intermediate network entity acting as TaaS proxy, to enable management and/or assessment of the trustworthiness of the IoT device.

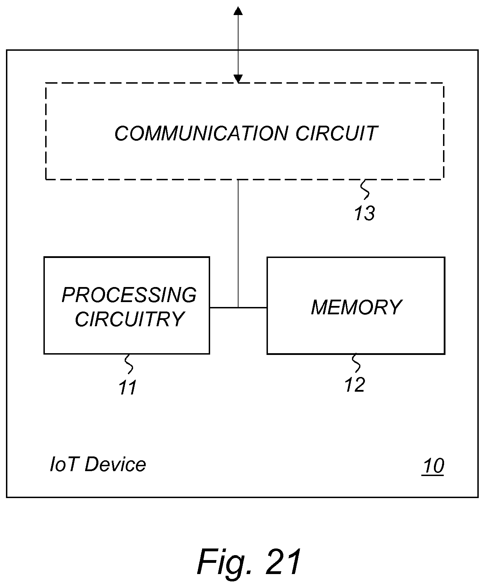

FIG. 21 is a schematic block diagram illustrating an example of an IoT device.

In this example, the IoT device comprises processing circuitry 710 and memory 720, the memory 720 comprising instructions executable by the processing circuitry 710, whereby the processing circuitry 710 is operative to support the IoT Trustworthiness as a Service (TaaS).

By way of example, the IoT device (10) may be provisioned with a Uniform Resource Identifier (URI) and/or Uniform Resource Locator (URL) pointing to the digital certification proof.

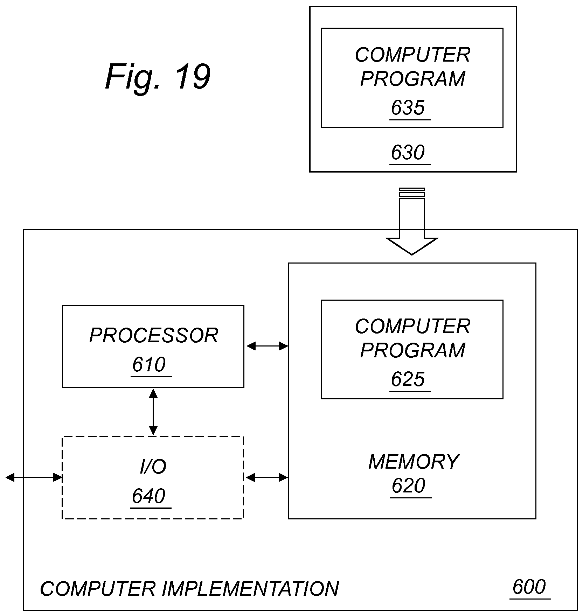

FIG. 19 is a schematic diagram illustrating an example of a computer-implementation according to an embodiment. In this particular example, at least some of the steps, functions, procedures, modules and/or blocks described herein are implemented in a computer program 625; 635, which is loaded into the memory 620 for execution by processing circuitry including one or more processors 610. The processor(s) 610 and memory 620 are interconnected to each other to enable normal software execution. An optional input/output device 640 may also be interconnected to the processor(s) 610 and/or the memory 620 to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors 610 is thus configured to perform, when executing the computer program 625, well-defined processing tasks such as those described herein.

The processing circuitry does not have to be dedicated to only execute the above-described steps, functions, procedure and/or blocks, but may also execute other tasks.

In a particular embodiment, there is provided a computer program 625; 635 for controlling, when executed, a system configured to support Internet of Things (IoT) Trustworthiness as a Service (TaaS) related to an IoT device, the IoT device being arranged for connection to the Internet via a wired or wireless communication system.

The computer program 625; 635 comprises instructions, which when executed by at least one processor 610, cause the system to:
- perform an automated request-response procedure to obtain a digital IoT certification proof representative of the trustworthiness of the IoT device from an IoT certification system by:
- requesting the digital IoT certification proof from the IoT certification system based on an identifier for locating the digital IoT certification proof for the IoT device; and
- receiving a response comprising the digital IoT certification proof from the IoT certification system to enable management and/or assessment of the trustworthiness of the IoT device.

In another embodiment, there is provided a computer program 625; 635 for controlling, when executed, an Internet of Things (IoT) certification system configured to support IoT Trustworthiness as a Service (TaaS) related to an IoT device, the IoT device being arranged for connection to the Internet via a wired or wireless communication system.

The computer program 625; 635 comprises instructions, which when executed by at least one processor 610, cause the IoT certification system to:
- perform an automated request-response procedure to provide a digital IoT certification proof representative of the trustworthiness of the IoT device to a requesting network entity by:
- receiving a request for the digital IoT certification proof from the requesting network entity including an identifier for locating the digital IoT certification proof for the IoT device;
- retrieving the digital IoT certification proof based on the identifier; and
- sending a response comprising the digital IoT certification proof to the requesting network entity to enable management and/or assessment of the trustworthiness of the IoT device.

According to yet another embodiment, there is provided a computer program 625; 635 for controlling, when executed, a system configured to support Internet of Things (IoT) Trustworthiness as a Service (TaaS) related to an IoT device, the IoT device being arranged for connection to the Internet via a wired or wireless communication system.

The computer program 625; 635 comprises instructions, which when executed by at least one processor 610, cause the system to:
obtain a digital IoT certification proof representative of the trustworthiness of the IoT device by receiving the digital loT certification proof directly from the IoT device, which have been provisioned with the digital IoT certification proof from an IoT certification system or an intermediate network entity relaying the digital IoT certification proof from the IoT certification system based on an identifier for locating the digital IoT certification proof for the IoT device, to enable management and/or assessment of the trustworthiness of the IoT device

According to another aspect, there is provided a computer-program product comprising a non-transitory computer-readable medium 620; 630 having stored thereon such a computer program 625; 635.

The proposed technology also provides a carrier comprising the computer program, wherein the carrier is one of an electronic signal, an optical signal, an electromagnetic signal, a magnetic signal, an electric signal, a radio signal, a microwave signal, or a computer-readable storage medium.

By way of example, the software or computer program 625; 635 may be realized as a computer program product, which is normally carried or stored on a computer-readable medium 620; 630, in particular a non-volatile medium. The computer-readable medium may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program may thus be loaded into the operating memory of a computer or equivalent processing device for execution by the processing circuitry thereof.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Alternatively, it is possible to realize such module(s) predominantly by hardware modules, or alternatively by hardware, with suitable interconnections between relevant modules. Particular examples include one or more suitably configured digital signal processors and other known electronic circuits, e.g. discrete logic gates interconnected to perform a specialized function, and/or Application Specific Integrated Circuits (ASICs) as previously mentioned. Other examples of usable hardware include input/output (I/O) circuitry and/or circuitry for receiving and/or sending signals. The extent of software versus hardware is purely implementation selection.

For example, the virtual apparatus may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

The term module or unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

It is also becoming increasingly popular to provide computing services (hardware and/or software) in network devices such as network nodes and/or servers where the resources are delivered as a service to remote locations over a network. By way of example, this means that functionality, as described herein, can be distributed or re-located to one or more separate physical nodes or servers. The functionality may be re-located or distributed to one or more jointly acting physical and/or virtual machines that can be positioned in separate physical node(s), i.e. in the so-called cloud. This is sometimes also referred to as cloud computing, which is a model for enabling ubiquitous on-demand network access to a pool of configurable computing resources such as networks, servers, storage, applications and general or customized services.

There are different forms of virtualization that can be useful in this context, including one or more of:
- Consolidation of network functionality into virtualized software running on customized or generic hardware. This is sometimes referred to as network function virtualization.
- Co-location of one or more application stacks, including operating system, running on separate hardware onto a single hardware platform. This is sometimes referred to as system virtualization, or platform virtualization.
- Co-location of hardware and/or software resources with the objective of using some advanced domain level scheduling and coordination technique to gain increased system resource utilization. This is sometimes referred to as resource virtualization, or centralized and coordinated resource pooling.

Although it may often desirable to centralize functionality in so-called generic data centers, in other scenarios it may in fact be beneficial to distribute functionality over different parts of the network.

A Network Device (ND) may generally be seen as an electronic device being communicatively connected to other electronic devices in the network.

By way of example, the network device may be implemented in hardware, software or a combination thereof. For example, the network device may be a special-purpose network device or a general-purpose network device, or a hybrid thereof.

A special-purpose network device may use custom processing circuits and a proprietary operating system (OS), for execution of software to provide one or more of the features or functions disclosed herein.

A general-purpose network device may use common off-the-shelf (COTS) processors and a standard OS, for execution of software configured to provide one or more of the features or functions disclosed herein.

By way of example, a special-purpose network device may include hardware comprising processing or computing resource(s), which typically include a set of one or more processors, and physical network interfaces (NIs), which sometimes are called physical ports, as well as non-transitory machine readable storage media having stored thereon software. A physical NI may be seen as hardware in a network device through which a network connection is made, e.g. wirelessly through a wireless network interface controller (WNIC) or through plugging in a cable to a physical port connected to a network interface controller (NIC). During operation, the software may be executed by the hardware to instantiate a set of one or more software instance(s). Each of the software instance(s), and that part of the hardware that executes that software instance, may form a separate virtual network element.

By way of another example, a general-purpose network device may for example include hardware comprising a set of one or more processor(s), often COTS processors, and network interface controller(s) (NICs), as well as non-transitory machine-readable storage media having stored thereon software. During operation, the processor(s) executes the software to instantiate one or more sets of one or more applications. While one embodiment does not implement virtualization, alternative embodiments may use different forms of virtualization - for example represented by a virtualization layer and software containers. For example, one such alternative embodiment implements operating system-level virtualization, in which case the virtualization layer represents the kernel of an operating system (or a shim executing on a base operating system) that allows for the creation of multiple software containers that may each be used to execute one of a sets of applications. In an example embodiment, each of the software containers (also called virtualization engines, virtual private servers, or jails) is a user space instance (typically a virtual memory space). These user space instances may be separate from each other and separate from the kernel space in which the operating system is executed; the set of applications running in a given user space, unless explicitly allowed, cannot access the memory of the other processes. Another such alternative embodiment implements full virtualization, in which case: 1) the virtualization layer represents a hypervisor (sometimes referred to as a Virtual Machine Monitor (VMM)) or the hypervisor is executed on top of a host operating system; and 2) the software containers each represent a tightly isolated form of software container called a virtual machine that is executed by the hypervisor and may include a guest operating system.

A hypervisor is the software/hardware that is responsible for creating and managing the various virtualized instances and in some cases the actual physical hardware. The hypervisor manages the underlying resources and presents them as virtualized instances. What the hypervisor virtualizes to appear as a single processor may actually comprise multiple separate processors. From the perspective of the operating system, the virtualized instances appear to be actual hardware components.

A virtual machine is a software implementation of a physical machine that runs programs as if they were executing on a physical, non-virtualized machine; and applications generally do not know they are running on a virtual machine as opposed to running on a "bare metal" host electronic device, though some systems provide para-virtualization which allows an operating system or application to be aware of the presence of virtualization for optimization purposes.

The instantiation of the one or more sets of one or more applications as well as the virtualization layer and software containers if implemented, are collectively referred to as software instance(s). Each set of applications, corresponding software container if implemented, and that part of the hardware that executes them (be it hardware dedicated to that execution and/or time slices of hardware temporally shared by software containers), forms a separate virtual network element(s).

The virtual network element(s) may perform similar functionality compared to Virtual Network Element(s) (VNEs). This virtualization of the hardware is sometimes referred to as Network Function Virtualization (NFV)). Thus, NFV may be used to consolidate many network equipment types onto industry standard high-volume server hardware, physical switches, and physical storage, which could be located in data centers, NDs, and Customer Premise Equipment (CPE). However, different embodiments may implement one or more of the software container(s) differently. For example, while embodiments are illustrated with each software container corresponding to a VNE, alternative embodiments may implement this correspondence or mapping between software container-VNE at a finer granularity level; it should be understood that the techniques described herein with reference to a correspondence of software containers to VNEs also apply to embodiments where such a finer level of granularity is used.

According to yet another embodiment, there is provided a hybrid network device, which includes both custom processing circuitry/proprietary OS and COTS processors/standard OS in a network device, e.g. in a card or circuit board within a network device ND. In certain embodiments of such a hybrid network device, a platform Virtual Machine (VM), such as a VM that implements functionality of a special-purpose network device, could provide for para-virtualization to the hardware present in the hybrid network device.

The embodiments described above are merely given as examples, and it should be understood that the proposed technology is not limited thereto. It will be understood by those skilled in the art that various modifications, combinations and changes may be made to the embodiments without departing from the present scope as defined by the appended claims. In particular, different part solutions in the different embodiments can be combined in other configurations, where technically possible.

### REFERENCES

1. IoT Cybersecurity Certification Program Management Document, CTIA, Version 1.1, May 2019.
2. Baseline Security Recommendations for loT, ENISA, November 20, 2017.
3. Code of Practice for Consumer IoT Security, Department for Digital, Culture, Media & Sport, UK, October 14, 2018.
4. ETSI TS 103 645 Cyber Security for Consumer Internet of Things, V1.1.1, February 2019.
5. Manufacturer Usage Description Specification, IETF RFC 8520, March 2019.
6. Shodan website, https://www.shodan.io/, 2019.
7. Censys website, https://censys.io/, 2019.
8. Interagency Report on the Status of International Cybersecurity Standardization for the Internet of Things (IoT), Chapter 4.1, November 2018.

## Claims

1. A method for supporting Internet of Things, IoT, Trustworthiness as a Service, TaaS, related to an IoT device (10), the loT device being arranged for connection to the Internet via a wired or wireless communication system,
wherein said method is based on an automated request-response procedure performed by a network entity (20; 30; 40; 200; 300) acting as TaaS consumer, TaaS receiver or TaaS proxy, also referred to as TaaS consumer/receiver/proxy, to obtain a digital IoT certification proof representative of the trustworthiness of the loT device from an loT certification system (100) acting as TaaS provider,
wherein the automated request-response procedure comprises:
- responsive to receiving, from the loT device (10), a request for access to an IoT application service or an loT connectivity service, requesting (S1) the digital loT certification proof from the TaaS provider based on an identifier for locating the digital IoT certification proof for the loT device; and
- receiving (S2) a response comprising the digital IoT certification proof from the TaaS provider to enable management and/or assessment of the trustworthiness of the loT device, wherein the identifier for locating the IoT certification proof is related to the brand, model, version and/or type of loT device and valid for multiple loT devices.

2. A method for supporting Internet of Things, IoT, Trustworthiness as a Service, TaaS, related to an IoT device (10), the loT device being arranged for connection to the Internet via a wired or wireless communication system,
wherein said method is based on an automated request-response procedure performed by an loT certification system (100) acting as TaaS provider to provide a digital loT certification proof representative of the trustworthiness of the loT device to a network entity (20; 30; 40; 200; 300) acting as TaaS consumer, TaaS receiver or TaaS proxy, also referred to as TaaS consumer/receiver/proxy,
wherein the automated request-response procedure comprises:
- receiving (S11) a request for the digital loT certification proof from the network entity acting as TaaS consumer/receiver/proxy including an identifier for locating the digital loT certification proof for the IoT device, which request is received in response to the IoT device (10) requesting access to an loT application service or an loT connectivity service;
- retrieving (S12) the digital IoT certification proof based on the identifier, wherein the identifier for locating the IoT certification proof is related to the brand, model, version and/or type of loT device and valid for multiple loT devices;
- sending (S13) a response comprising the digital IoT certification proof to the network entity acting as TaaS consumer/receiver/proxy to enable management and/or assessment of the trustworthiness of the loT device.

3. The method of any of claims 1-2, wherein the network entity acting as TaaS consumer/receiver/proxy is a network node of an enterprise or associated IoT service provider for managing and/or evaluating the trustworthiness of a number of IoT devices associated with the enterprise.

4. The method of claim 3, wherein the loT device wants to access an loT application service or loT connectivity service, and the network entity acting as TaaS consumer/receiver/proxy receives the digital IoT certification proof in connection with a service request from the IoT device to enable assessment of the trustworthiness of the loT device before granting access to the IoT application service or loT connectivity service for the loT device.

5. The method of claim 3, wherein the network entity acting as TaaS consumer/receiver/proxy or another network entity interconnected to the network entity acting as TaaS consumer/receiver/proxy comprises at least one service provider network node for selectively providing a service to the loT device in response to a service request from the loT device and/or an enterprise network node.

6. The method of claim 5, wherein the at least one service provider network node comprises an application service provider network node for providing one or more IoT application services and/or or a communication service provider network node for providing one or more IoT connectivity services.

7. A system (200) configured to support Internet of Things, IoT, Trustworthiness as a Service, TaaS, related to an IoT device (10), the loT device being arranged for connection to the Internet via a wired or wireless communication system,
wherein said system (200) is configured to operate based on an automated request-response procedure to obtain a digital loT certification proof representative of the trustworthiness of the IoT device from an loT certification system (100),
wherein said system (200) is configured to, responsive to receiving, from the loT device (10), a request for access to an IoT application service or an loT connectivity service, request the digital loT certification proof from the loT certification system (100) based on an identifier for locating the digital IoT certification proof for the loT device; and
wherein said system (200) is configured to receive a response comprising the digital loT certification proof from the IoT certification system (100) to enable management and/or assessment of the trustworthiness of the loT device, wherein the identifier for locating the loT certification proof is related to the brand, model, version and/or type of loT device and valid for multiple loT devices.

8. An Internet of Things, IoT, certification system (100) configured to support loT Trustworthiness as a Service, TaaS, related to an IoT device (10), the loT device being arranged for connection to the Internet via a wired or wireless communication system,
wherein the loT certification system (100) is configured to operate based on an automated request-response procedure to provide a digital loT certification proof representative of the trustworthiness of the IoT device to a requesting network entity (20; 30; 200; 300),
wherein the loT certification system (100) is configured to receive a request for the digital loT certification proof from the requesting network entity (20; 30; 200; 300) including an identifier for locating the digital IoT certification proof for the IoT device, which request is received in response to the loT device (10) requesting access to an IoT application service or an loT connectivity service;
wherein the IoT certification system (100) is configured to retrieve the digital loT certification proof based on the identifier, wherein the identifier for locating the IoT certification proof is related to the brand, model, version and/or type of IoT device and valid for multiple loT devices; and
wherein the loT certification system (100) is configured to send a response comprising the digital loT certification proof to the requesting network entity (20; 30; 200; 300) to enable management and/or assessment of the trustworthiness of the loT device.

9. A computer program (625; 635) for controlling, when executed, a system configured to support Internet of Things, IoT, Trustworthiness as a Service, TaaS, related to an loT device, the loT device being arranged for connection to the Internet via a wired or wireless communication system,
wherein the computer program (625; 635) comprises instructions, which when executed by at least one processor (610), cause the system to:
- perform an automated request-response procedure to obtain a digital loT certification proof representative of the trustworthiness of the IoT device from an loT certification system by:
- responsive to receiving, from the loT device (10), a request for access to an IoT application service or an loT connectivity service, requesting the digital loT certification proof from the loT certification system based on an identifier for locating the digital IoT certification proof for the loT device; and
- receiving a response comprising the digital IoT certification proof from the loT certification system to enable management and/or assessment of the trustworthiness of the loT device, wherein the identifier for locating the loT certification proof is related to the brand, model, version and/or type of loT device and valid for multiple loT devices.

10. A computer program (625; 635) for controlling, when executed, an Internet of Things, IoT, certification system configured to support IoT Trustworthiness as a Service, TaaS, related to an loT device, the loT device being arranged for connection to the Internet via a wired or wireless communication system,
wherein the computer program (625; 635) comprises instructions, which when executed by at least one processor (610), cause the loT certification system to:
- perform an automated request-response procedure to provide a digital loT certification proof representative of the trustworthiness of the IoT device to a requesting network entity by:
- receiving a request for the digital loT certification proof from the requesting network entity including an identifier for locating the digital IoT certification proof for the IoT device, which request is received in response to the loT device (10) requesting access to an loT application service or an IoT connectivity service;
- retrieving the digital IoT certification proof based on the identifier, wherein the identifier for locating the IoT certification proof is related to the brand, model, version and/or type of IoT device and valid for multiple IoT devices; and
- sending a response comprising the digital loT certification proof to the requesting network entity to enable management and/or assessment of the trustworthiness of the loT device.

## Patentansprüche

1. Verfahren zum Unterstützen von Trustworthiness as a Service (TaaS) für das Internet der Dinge (IoT), loT-TaaS, in Bezug auf eine loT-Vorrichtung (10), wobei die loT-Vorrichtung für das Verbinden mit dem Internet über ein drahtgebundenes oder drahtloses Kommunikationssystem eingerichtet ist,
wobei das Verfahren auf einem automatisierten Anforderung-Antwort-Verfahren basiert, das von einer Netzwerkeinheit (20; 30; 40; 200; 300) durchgeführt wird, die als TaaS-Verbraucher, TaaS-Empfänger oder TaaS-Proxy fungiert, auch als TaaS-Verbraucher/Empfänger/Proxy bezeichnet, um einen digitalen loT-Zertifizierungsnachweis, der die Vertrauenswürdigkeit der loT-Vorrichtung darstellt, von einem loT-Zertifizierungssystem (100) zu erhalten, das als TaaS-Anbieter fungiert.
wobei das automatisierte Anforderung-Antwort-Verfahren umfasst:
- als Antwort auf das Empfangen, von einer loT-Vorrichtung (10), einer Anforderung für den Zugriff auf einen loT-Anwendungsdienst oder einen loT-Konnektivitätsdienst, Anfordern (S1) des digitalen loT-Zertifizierungsnachweises von dem TaaS-Anbieter basierend auf einer Kennung zum Auffinden des digitalen loT-Zertifizierungsnachweises für die loT-Vorrichtung; und
- Empfangen (S2) einer Antwort, umfassend den digitalen loT-Zertifizierungsnachweis von dem TaaS-Anbieter, um das Verwalten und/oder das Bewerten der Vertrauenswürdigkeit der loT-Vorrichtung zu ermöglichen, wobei sich die Kennung zum Auffinden des loT-Zertifizierungsnachweises auf die Marke, das Modell, die Version und/oder den Typ der loT-Vorrichtung bezieht und für mehrere loT-Vorrichtungen gültig ist.

2. Verfahren zum Unterstützen von Trustworthiness as a Service (TaaS) für das Internet der Dinge (IoT), loT-TaaS,
in Bezug auf eine loT-Vorrichtung (10), wobei die loT-Vorrichtung für das Verbinden mit dem Internet über ein drahtgebundenes oder drahtloses Kommunikationssystem eingerichtet ist,
wobei das Verfahren auf einem automatisierten Anforderung-Antwort-Verfahren basiert, das von einem loT-Zertifizierungssystem (100) durchgeführt wird, das als TaaS-Anbieter fungiert, um einen digitalen loT-Zertifizierungsnachweis, der die Vertrauenswürdigkeit der loT-Vorrichtung darstellt, an eine Netzwerkeinheit (20; 30; 40; 200; 300) bereitzustellen, die als TaaS-Verbraucher, TaaS-Empfänger oder TaaS-Proxy fungiert, auch als TaaS-Verbraucher/Empfänger/Proxy bezeichnet,
wobei das automatisierte Anforderung-Antwort-Verfahren umfasst:
- Empfangen (S11) einer Anforderung für den digitalen loT-Zertifizierungsnachweis von der Netzwerkeinheit, die als TaaS-Verbraucher/Empfänger/Proxy fungiert, einschließlich einer Kennung zum Auffinden des digitalen loT-Zertifizierungsnachweises für die loT-Vorrichtung, wobei die Anforderung als Antwort auf das Anfordern durch die loT-Vorrichtung (10) für den Zugriff auf einen loT-Anwendungsdienst oder einen loT-Konnektivitätsdienst empfangen wird;
- Abrufen (S12) des digitalen loT-Zertifizierungsnachweises basierend auf der Kennung, wobei sich die Kennung zum Auffinden des loT-Zertifizierungsnachweises auf die Marke, das Modell, die Version und/oder den Typ der loT-Vorrichtung bezieht und für mehrere loT-Vorrichtungen gültig ist;
- Senden (S13) einer Antwort, umfassend den digitalen loT-Zertifizierungsnachweis, an die Netzwerkeinheit, die als TaaS-Verbraucher/Empfänger/Proxy fungiert, um das Verwalten und/oder das Bewerten der Vertrauenswürdigkeit der loT-Vorrichtung zu ermöglichen.

3. Verfahren nach einem der Ansprüche 1 bis 2, wobei die als TaaS-Verbraucher/Empfänger/Proxy fungierende Netzwerkeinheit ein Netzwerkknoten eines Unternehmens oder eines zugeordneten loT-Dienstanbieters zum Verwalten und/oder Bewerten der Vertrauenswürdigkeit einer Anzahl von loT-Vorrichtungen ist, die dem Unternehmen zugeordnet sind.

4. Verfahren nach Anspruch 3, wobei die loT-Vorrichtung auf einen loT-Anwendungsdienst oder loT-Konnektivitätsdienst zugreifen möchte und die als TaaS-Verbraucher/Empfänger/Proxy fungierende Netzwerkeinheit den digitalen loT-Zertifizierungsnachweis in Verbindung mit einer Serviceanforderung von der loT-Vorrichtung empfängt, um das Bewerten der Vertrauenswürdigkeit der loT-Vorrichtung zu ermöglichen, bevor der loT-Vorrichtung Zugriff auf den loT-Anwendungsdienst oder loT-Konnektivitätsdienst gewährt wird.

5. Verfahren nach Anspruch 3, wobei die als TaaS-Verbraucher/Empfänger/Proxy fungierende Netzwerkeinheit oder eine andere mit der als TaaS-Verbraucher/Empfänger/Proxy fungierenden Netzwerkeinheit verbundene Netzwerkeinheit mindestens einen Dienstanbieter-Netzwerkknoten umfasst, um der loT-Vorrichtung als Antwort auf eine Dienstanforderung von der loT-Vorrichtung und/oder einem Unternehmensnetzwerkknoten selektiv einen Dienst bereitzustellen.

6. Verfahren nach Anspruch 5, wobei der mindestens eine Dienstanbieter-Netzwerkknoten einen Anwendungsdienstanbieter-Netzwerkknoten zum Bereitstellen eines oder mehrerer loT-Anwendungsdienste und/oder einen Kommunikationsdienstanbieter-Netzwerkknoten zum Bereitstellen eines oder mehrerer loT-Konnektivitätsdienste umfasst.

7. System (200), das konfiguriert ist, um Trustworthiness as a Service (TaaS) für das Internet der Dinge (IoT), loT-TaaS, in Bezug auf eine loT-Vorrichtung (10) zu unterstützen, wobei die loT-Vorrichtung für das Verbinden mit dem Internet über ein drahtgebundenes oder drahtloses Kommunikationssystem eingerichtet ist,
wobei das System (200) konfiguriert ist, um basierend auf einem automatisierten Anforderung-Antwort-Verfahren zu arbeiten, um einen digitalen loT-Zertifizierungsnachweis, der die Vertrauenswürdigkeit der loT-Vorrichtung darstellt, von einem loT-Zertifizierungssystem (100) zu erhalten,
wobei das System (200) konfiguriert ist, um als Antwort auf das Empfangen, von der loT-Vorrichtung (10), einer Anforderung für den Zugriff auf einen loT-Anwendungsdienst oder einen loT-Konnektivitätsdienst, den digitalen loT-Zertifizierungsnachweis von dem loT-Zertifizierungssystem (100) basierend auf einer Kennung zum Auffinden des digitalen loT-Zertifizierungsnachweises für die loT-Vorrichtung anzufordern; und
wobei das System (200) konfiguriert ist, um eine Antwort, umfassend den digitalen loT-Zertifizierungsnachweis von dem loT-Zertifizierungssystem (100), zu empfangen, um das Verwalten und/oder das Bewerten der Vertrauenswürdigkeit der loT-Vorrichtung zu ermöglichen, wobei sich die Kennung zum Auffinden des loT-Zertifizierungsnachweises auf die Marke, das Modell, die Version und/oder den Typ der loT-Vorrichtung bezieht und für mehrere loT-Vorrichtungen gültig ist.

8. loT-Zertifizierungssystem (100), das konfiguriert ist, um Trustworthiness as a Service (TaaS) für das Internet der Dinge (IoT), loT-TaaS, in Bezug auf eine loT-Vorrichtung (10) zu unterstützen, wobei die loT-Vorrichtung für das Verbinden mit dem Internet über ein drahtgebundenes oder drahtloses Kommunikationssystem eingerichtet ist,
wobei das loT-Zertifizierungssystem (100) konfiguriert ist, um basierend auf einem automatisierten Anforderung-Antwort-Verfahren zu arbeiten, um einen digitalen loT-Zertifizierungsnachweis, der die Vertrauenswürdigkeit der loT-Vorrichtung darstellt, an eine anfordernde Netzwerkeinheit (20; 30; 200; 300) bereitzustellen,
wobei das loT-Zertifizierungssystem (100) konfiguriert ist, um eine Anforderung für den digitalen loT-Zertifizierungsnachweis von der anfordernden Netzwerkeinheit (20; 30; 200; 300) zu empfangen, einschließlich einer Kennung zum Auffinden des digitalen loT-Zertifizierungsnachweises für die loT-Vorrichtung, wobei die Anforderung als Antwort auf das Anfordern durch die loT-Vorrichtung (10) für den Zugriff auf einen loT-Anwendungsdienst oder einen loT-Konnektivitätsdienst empfangen wird;
wobei das loT-Zertifizierungssystem (100) konfiguriert ist, um den digitalen loT-Zertifizierungsnachweis basierend auf der Kennung abzurufen, wobei sich die Kennung zum Auffinden des loT-Zertifizierungsnachweises auf die Marke, das Modell, die Version und/oder den Typ der loT-Vorrichtung bezieht und für mehrere loT-Vorrichtungen gültig ist; und
wobei das loT-Zertifizierungssystem (100) konfiguriert ist, um eine Antwort umfassend den digitalen loT-Zertifizierungsnachweis an die anfordernde Netzwerkeinheit (20; 30; 200; 300) zu senden, um das Verwalten und/oder das Bewerten der Vertrauenswürdigkeit der loT-Vorrichtung zu ermöglichen.

9. Computerprogramm (625; 635) zum Steuern, wenn es ausgeführt wird, eines Systems, das konfiguriert ist, um Trustworthiness as a Service (TaaS) für das Internet der Dinge (IoT), loT-TaaS, in Bezug auf eine loT-Vorrichtung zu unterstützen, wobei die loT-Vorrichtung für das Verbinden mit dem Internet über ein drahtgebundenes oder drahtloses Kommunikationssystem eingerichtet ist,
wobei das Computerprogramm (625; 635) Anweisungen umfasst, die, wenn sie von mindestens einem Prozessor (610) ausgeführt werden, das System veranlassen zum:
- Durchführen eines automatisierten Anforderung-Antwort-Verfahrens, um einen digitalen loT-Zertifizierungsnachweis, der die Vertrauenswürdigkeit der loT-Vorrichtung darstellt, von einem loT-Zertifizierungssystem zu erhalten durch:
- als Antwort auf das Empfangen, von der loT-Vorrichtung (10), einer Anforderung für den Zugriff auf einen loT-Anwendungsdienst oder einen loT-Konnektivitätsdienst, Anfordern des digitalen loT-Zertifizierungsnachweises von dem loT-Zertifizierungssystem basierend auf einer Kennung zum Auffinden des digitalen loT-Zertifizierungsnachweises für die loT-Vorrichtung; und
- Empfangen einer Antwort, umfassend den digitalen loT-Zertifizierungsnachweis von dem loT-Zertifizierungssystem, um das Verwalten und/oder das Bewerten der Vertrauenswürdigkeit der loT-Vorrichtung zu ermöglichen, wobei sich die Kennung zum Auffinden des loT-Zertifizierungsnachweises auf die Marke, das Modell, die Version und/oder den Typ der loT-Vorrichtung bezieht und für mehrere loT-Vorrichtungen gültig ist.

10. Computerprogramm (625; 635) zum Steuern, wenn es ausgeführt wird, eines loT-Zertifizierungssystems, das konfiguriert ist, um Trustworthiness as a Service, TaaS, in Bezug auf eine loT-Vorrichtung zu unterstützen, wobei die loT-Vorrichtung für das Verbinden mit dem Internet über ein drahtgebundenes oder drahtloses Kommunikationssystem eingerichtet ist,
wobei das Computerprogramm (625; 635) Anweisungen umfasst, die, wenn sie von mindestens einem Prozessor (610) ausgeführt werden, das loT-Zertifizierungssystem veranlassen zum:
- Durchführen eines automatisierten Anforderung-Antwort-Verfahrens, um einen digitalen loT-Zertifizierungsnachweis, der die Vertrauenswürdigkeit der loT-Vorrichtung darstellt, an eine anfordernde Netzwerkeinheit bereitzustellen, durch:
- Empfangen einer Anforderung für den digitalen loT-Zertifizierungsnachweis von der anfordernden Netzwerkeinheit, einschließlich einer Kennung zum Auffinden des digitalen loT-Zertifizierungsnachweises für die loT-Vorrichtung, wobei die Anforderung als Antwort auf das Anfordern durch die loT-Vorrichtung (10) für den Zugriff auf einen loT-Anwendungsdienst oder einen loT-Konnektivitätsdienst empfangen wird;
- Abrufen des digitalen loT-Zertifizierungsnachweises basierend auf der Kennung, wobei sich die Kennung zum Auffinden des loT-Zertifizierungsnachweises auf die Marke, das Modell, die Version und/oder den Typ der loT-Vorrichtung bezieht und für mehrere loT-Vorrichtungen gültig ist;
und
- Senden einer Antwort, umfassend den digitalen loT-Zertifizierungsnachweis, an die Netzwerkeinheit, um das Verwalten und/oder das Bewerten der Vertrauenswürdigkeit der loT-Vorrichtung zu ermöglichen.

## Revendications

1. Procédé de prise en charge de l'Internet des objets, loT, de la fiabilité en tant que service, TaaS, lié à un dispositif loT (10), le dispositif loT étant agencé pour être connecté à l'Internet par le biais d'un système de communication câblé ou sans fil,
dans lequel ledit procédé est basé sur une procédure automatisée de demande-réponse exécutée par une entité de réseau (20 ; 30 ; 40 ; 200 ; 300) agissant en tant que consommateur TaaS, récepteur TaaS ou proxy TaaS, également appelé consommateur/récepteur/proxy TaaS, afin d'obtenir une preuve de certification loT numérique représentant la fiabilité du dispositif loT à partir d'un système de certification loT (100) agissant en tant que fournisseur TaaS,
dans lequel la procédure automatisée de demande-réponse comprend :
- en réponse à la réception, de la part du dispositif loT (10), d'une demande d'accès à un service d'application loT ou à un service de connectivité loT, la demande (S1) de la preuve de certification loT numérique auprès du fournisseur TaaS sur la base d'un identifiant permettant la localisation de la preuve de certification loT numérique pour le dispositif loT ; et
- la réception (S2) d'une réponse comprenant la preuve de certification loT numérique du fournisseur TaaS pour permettre la gestion et/ou l'évaluation de la fiabilité du dispositif loT, dans lequel l'identifiant permettant la localisation de la preuve de certification loT est lié à la marque, au modèle, à la version et/ou au type du dispositif loT et valide pour plusieurs dispositifs loT.

2. Procédé de prise en charge de l'Internet des objets, loT, de la fiabilité en tant que service, TaaS,
lié à un dispositif loT (10), le dispositif loT étant agencé pour être connecté à l'Internet par le biais d'un système de communication câblé ou sans fil,
dans lequel ledit procédé est basé sur une procédure automatisée de demande-réponse exécutée par un système de certification loT (100) agissant en tant que fournisseur TaaS pour fournir une preuve de certification loT numérique représentant la fiabilité du dispositif loT à une entité de réseau (20 ; 30 ; 40 ; 200 ; 300) agissant en tant que consommateur TaaS, récepteur TaaS ou proxy TaaS, également appelé consommateur/récepteur/proxy TaaS,
dans lequel la procédure automatisée de demande-réponse comprend :
- la réception (S11) d'une demande de la preuve de certification loT numérique de la part de l'entité de réseau agissant en tant que consommateur/récepteur/proxy TaaS comportant un identifiant permettant la localisation de la preuve de certification loT numérique pour le dispositif loT, laquelle demande est reçue en réponse à la demande d'accès à un service d'application loT ou à un service de connectivité loT de la part du dispositif loT (10) ;
- la récupération (S12) de la preuve de certification loT numérique sur la base de l'identifiant, dans lequel l'identifiant permettant la localisation de la preuve de certification loT est lié à la marque, au modèle, à la version et/ou au type de dispositif loT et valide pour plusieurs dispositifs loT ;
- l'envoi (S13) d'une réponse comprenant la preuve de certification loT numérique à l'entité de réseau agissant en tant que consommateur/récepteur/proxy TaaS pour permettre la gestion et/ou l'évaluation de la fiabilité du dispositif loT.

3. Procédé selon l'une quelconque des revendications 1 à 2, dans lequel l'entité de réseau agissant en tant que consommateur/récepteur/proxy TaaS est un nœud de réseau d'une entreprise ou d'un fournisseur de services loT associé permettant la gestion et/ou l'évaluation de la fiabilité d'un certain nombre de dispositifs loT associés à l'entreprise.

4. Procédé selon la revendication 3, dans lequel le dispositif loT veut accéder à un service d'application loT ou à un service de connectivité loT, et l'entité de réseau agissant en tant que consommateur/récepteur/proxy TaaS reçoit la preuve de certification loT numérique en connexion avec une demande de service de la part du dispositif loT pour permettre l'évaluation de la fiabilité du dispositif loT avant d'accorder l'accès au service d'application loT ou au service de connectivité loT pour le dispositif loT.

5. Procédé selon la revendication 3, dans lequel l'entité de réseau agissant en tant que consommateur/récepteur/proxy TaaS ou une autre entité de réseau interconnectée à l'entité de réseau agissant en tant que consommateur/récepteur/proxy TaaS comprend au moins un nœud de réseau de fournisseur de services permettant la fourniture sélective d'un service au dispositif loT en réponse à une demande de service de la part du dispositif loT et/ou d'un nœud de réseau d'entreprise.

6. Procédé selon la revendication 5, dans lequel l'au moins un nœud de réseau de fournisseur de services comprend un nœud de réseau de fournisseur de services d'application permettant la fourniture d'un ou de plusieurs services d'application loT et/ou un nœud de réseau de fournisseur de services de communication permettant la fourniture d'un ou de plusieurs services de connectivité loT.

7. Système (200) configuré pour prendre en charge l'Internet des objets, loT, la fiabilité en tant que service, TaaS, lié à un dispositif loT (10), le dispositif loT étant agencé pour être connecté à l'Internet par le biais d'un système de communication câblé ou sans fil,
dans lequel ledit système (200) est configuré pour fonctionner sur la base d'une procédure automatisée de demande-réponse afin d'obtenir une preuve de certification loT numérique représentant la fiabilité du dispositif loT à partir d'un système de certification loT (100),
dans lequel ledit système (200) est configuré pour, en réponse à la réception, de la part du dispositif loT (10), d'une demande d'accès à un service d'application loT ou à un service de connectivité loT, demander la preuve de certification loT numérique au système de certification loT (100) sur la base d'un identifiant permettant la localisation de la preuve de certification loT numérique pour le dispositif loT ; et
dans lequel ledit système (200) est configuré pour recevoir une réponse comprenant la preuve de certification loT numérique du système de certification loT (100) pour permettre la gestion et/ou l'évaluation de la fiabilité du dispositif loT, dans lequel l'identifiant permettant la localisation de la preuve de certification loT est lié à la marque, au modèle, à la version et/ou au type du dispositif loT et valide pour plusieurs dispositifs loT.

8. Système de certification de l'Internet des objets, loT (100) configuré pour prendre en charge la fiabilité loT en tant que service, TaaS, lié à un dispositif loT (10), le dispositif loT étant agencé pour être connecté à l'Internet par le biais d'un système de communication câblé ou sans fil,
dans lequel le système de certification loT (100) est configuré pour fonctionner sur la base d'une procédure automatisée de demande-réponse afin de fournir une preuve de certification loT numérique représentant la fiabilité du dispositif loT à une entité de réseau requérante (20 ; 30 ; 200 ; 300),
dans lequel le système de certification loT (100) est configuré pour recevoir une demande de la preuve de certification loT numérique de la part de l'entité de réseau requérante (20 ; 30 ; 200 ; 300) comportant un identifiant permettant la localisation de la preuve de certification loT numérique pour le dispositif loT, laquelle demande est reçue en réponse à la demande d'accès à un service d'application loT ou à un service de connectivité loT de la part du dispositif loT (10) ;
dans lequel le système de certification loT (100) est configuré pour récupérer la preuve de certification loT numérique sur la base de l'identifiant, dans lequel l'identifiant permettant la localisation de la preuve de certification loT est lié à la marque, au modèle, à la version et/ou au type de dispositif loT et valide pour plusieurs dispositifs loT ; et
dans lequel le système de certification loT (100) est configuré pour envoyer une réponse comprenant la preuve de certification loT numérique à l'entité de réseau requérante (20 ; 30 ; 200 ; 300) pour permettre la gestion et/ou l'évaluation de la fiabilité du dispositif loT.

9. Programme informatique (625 ; 635) permettant la commande, lorsqu'il est exécuté, d'un système configuré pour prendre en charge l'Internet des objets, loT, la fiabilité en tant que service, TaaS, lié à un dispositif loT, le dispositif loT étant agencé pour être connecté à l'Internet par le biais d'un système de communication câblé ou sans fil,
dans lequel le programme informatique (625 ; 635) comprend des instructions qui, lorsqu'elles sont exécutées par au moins un processeur (610), amènent le système à :
- exécuter une procédure automatisée de demande-réponse afin d'obtenir une preuve de certification loT numérique représentant la fiabilité du dispositif loT à partir d'un système de certification loT par :
- en réponse à la réception, de la part du dispositif loT (10), d'une demande d'accès à un service d'application loT ou à un service de connectivité loT, la demande de la preuve de certification loT numérique auprès du système de certification loT sur la base d'un identifiant permettant la localisation de la preuve de certification loT numérique pour le dispositif loT ; et
- la réception d'une réponse comprenant la preuve de certification loT numérique du système de certification loT pour permettre la gestion et/ou l'évaluation de la fiabilité du dispositif loT, dans lequel l'identifiant permettant la localisation de la preuve de certification loT est lié à la marque, au modèle, à la version et/ou au type du dispositif loT et valide pour plusieurs dispositifs loT.

10. Programme informatique (625 ; 635) permettant la commande, lorsqu'il est exécuté, d'un système de certification de l'Internet des objets, loT, configuré pour prendre en charge la fiabilité loT en tant que service, TaaS, lié à un dispositif loT, le dispositif loT étant agencé pour être connecté à l'Internet par le biais d'un système de communication câblé ou sans fil,
dans lequel le programme informatique (625 ; 635) comprend des instructions qui, lorsqu'elles sont exécutées par au moins un processeur (610), amènent le système de certification loT à :
- exécuter une procédure automatisée de demande-réponse pour fournir une preuve de certification numérique loT représentant la fiabilité du dispositif loT à une entité de réseau requérante par :
- la réception d'une demande de la preuve de certification loT numérique de la part de l'entité de réseau requérante comportant un identifiant permettant la localisation de la preuve de certification loT numérique pour le dispositif loT, laquelle demande est reçue en réponse à une demande d'accès à un service d'application loT ou à un service de connectivité loT de la part du dispositif loT (10) ;
- la récupération de la preuve de certification loT numérique sur la base de l'identifiant, dans lequel l'identifiant permettant la localisation de la preuve de certification IoT est lié à la marque, au modèle, à la version et/ou au type de dispositif loT et valide pour plusieurs dispositifs loT ; et
- l'envoi d'une réponse comprenant la preuve de certification numérique loT à l'entité de réseau requérante pour permettre la gestion et/ou l'évaluation de la fiabilité du dispositif loT.
